(19)

Europäisches Patentamt

European Patent Office

Office européen des brevets

(11)  **EP 3 029 559 A1**

(12)  **EUROPEAN PATENT APPLICATION**

(43) Date of publication:
08.06.2016 Bulletin 2016/23

(51) Int Cl.:
*G06F 3/048* (2006.01)

(21) Application number: 15198033.1

(22) Date of filing: 04.12.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.12.2014 KR 20140174325**

(71) Applicant: **Samsung Electronics Co., Ltd.
Gyeonggi-do 16677 (KR)**

(72) Inventors:
• **You, Myoung-Soo
  16677 Suwon-si (KR)**
• **Ahn, Jin-Young
  16677 Suwon-si (KR)**

(74) Representative: **Nederlandsch Octrooibureau
P.O. Box 29720
2502 LS The Hague (NL)**

(54)  **ELECTRO DEVICE AND METHOD FOR PROCESSING TOUCH INPUT**

(57)    An electronic device and a control method of an electronic device are provided. A control method of an electronic device includes determining to switch from a touch mode to a touchpad mode for processing a touch input received on a touch screen, and processing the received touch input based on the touchpad mode.

FIG.1

EP 3 029 559 A1

## Description

## BACKGROUND

1. Field of the Disclosure

The present disclosure relates generally to an electronic device and a method for processing a touch input.

2. Description of the Related Art

An electronic device including a touch screen, e.g., a mobile electronic device, may determine coordinates of user input thereon by using a capacitive scheme, a resistive scheme, an infrared scheme and/or an ultrasonic scheme. Accordingly, the user may enter a predetermined command on the touch screen without an additional electronic input device such as the conventional mouse.

However, because the electronic device may also display a screen image primarily designed for a display of a personal computer (PC), e.g., a screen image including a user interface that is based on a PC operating system (OS), the electronic device may display a high-resolution screen image on a size-limited screen. However, because a screen of the electronic device is often relatively smaller in size than that of a PC display, it is often difficult for a user to select an icon or menu displayed on the small screen of the electronic device.

## SUMMARY

The present disclosure is made to provide an electronic device and a control method for addressing the above-mentioned problems and other problems.

In accordance with an aspect of the present disclosure, a control method of an electronic device id provided, which includes determining to switch from a touch mode to a touchpad mode for processing a touch input received on a touch screen; and processing the received touch input based on the touchpad mode.

In accordance with another aspect of the present disclosure, an electronic device is provided, which includes a touch screen; and a processor configured to determine to switch from a touch mode to a touchpad mode for processing a touch input received on the touch screen, and to process the received touch input based on the touchpad mode.

In accordance with another aspect of the present disclosure, an electronic device is provided, which includes a sensing module configured to receive a floating input; and a processor configured to determine to switch from a touch mode to a touchpad mode, and process the received floating input based on the touchpad mode.

## BRIEF DESCRIPTION OF THE DRAWINGS

The above and other aspects, features, and advantages of certain embodiments of the present disclosure will be more apparent from the following description when taken in conjunction with the accompanying drawings, in which:

FIG. 1 illustrates a network environment including an electronic device according to an embodiment of the present disclosure;
FIG. 2 illustrates a program module according to an embodiment of the present disclosure;
FIG. 3 illustrates a screen configuration module of an electronic device according to an embodiment of the present disclosure;
FIG. 4A is a flowchart illustrating a control method of an electronic device according to an embodiment of the present disclosure;
FIG. 4B illustrates mode switching of an electronic device according to an embodiment of the present disclosure;
FIGs. 5A and 5B illustrate operations of a touch mode according to an embodiment of the present disclosure;
FIGs. 6A to 6H illustrate operations of a touchpad mode according to an embodiment of the present disclosure;
FIG. 7 is a flowchart illustrating a control method of an electronic device according to an embodiment of the present disclosure;
FIGs. 8A and 8B illustrate a mode switching command according to an embodiment of the present disclosure;
FIG. 9 is a flowchart illustrating a method for determining a sub-touch input corresponding to a specific user finger according to an embodiment of the present disclosure;
FIG. 10 illustrates a relationship between fingers and touch inputs according to an embodiment of the present disclosure;
FIG. 11 illustrates operations of an electronic device according to an embodiment of the present disclosure;
FIG. 12 is a flowchart illustrating a control method of an electronic device according to an embodiment of the present disclosure;
FIG. 13 is a flowchart illustrating a control method of an electronic device according to an embodiment of the present disclosure;
FIGs. 14A and 14B illustrate a floating input according to an embodiment of the present disclosure;
FIG. 15 is a flowchart illustrating a control method of an electronic device according to an embodiment of the present disclosure;
FIGs. 16A and 16B illustrate operations of an electronic device according to an embodiment of the present disclosure;

FIG. 17 is a flowchart illustrating a control method of an electronic device according to an embodiment of the present disclosure;

FIGs. 18A and 18B illustrate operations of an electronic device according to an embodiment of the present disclosure;

FIG. 19 is a flowchart illustrating a control method of an electronic device according to an embodiment of the present disclosure;

FIG. 20 is a flowchart illustrating a control method of an electronic device according to an embodiment of the present disclosure;

FIG. 21A illustrates touch input processing for comparison with the present disclosure;

FIG. 21B illustrates touch input processing according to an embodiment of the present disclosure; and

FIG. 22 illustrates an electronic device according to an embodiment of the present disclosure.

Throughout the drawings, like reference numerals will be understood to refer to like parts, components, and structures.

## DETAILED DESCRIPTION

Hereinafter, various embodiments of the present disclosure are described with reference to the accompanying drawings. Various changes may be made to the present disclosure, and the present disclosure may come with a diversity of embodiments. Some embodiments of the present disclosure are shown and described in connection with the drawings. However, it should be appreciated that the present disclosure is not limited to the described embodiments, and all changes and/or equivalents or replacements thereto also belong to the scope of the present disclosure.

Herein, the terms "comprise", "have" and/or "comprising" specify the presence of disclosed functions, operations, components, etc., but do not preclude the presence or addition of one or more other functions, operations, components, etc.

Herein, the phrase "A or B" or "at least one of A and/or B" includes any and all combinations of one or more of the associated listed items. For examples, "A or B" or "at least one of A or/and B" each may include A, B, or both A and B.

Ordinal numbers, such as "first", "second", etc., may modify various components of various embodiments, but do not limit those components. For example, these terms do not limit an order and/or importance of the components. These terms are only used to distinguish one component from another. For example, a first user device and a second user device are different user devices from each other. Accordingly, a first component may be denoted a second component, and vice versa, without departing from the scope of the present disclosure.

When a component is "connected to" or "coupled to" another component, the component may be directly connected or coupled to the other component, or other component(s) may be included therebetween. However, when a component is "directly connected to" or "directly coupled to" another component, there are no intervening components therebetween.

Singular forms such as "a," "an," and "the" include plural references unless the context clearly dictates otherwise.

Unless otherwise defined, all terms including technical and scientific terms used herein have the same meaning as commonly understood by one of ordinary skill in the art to which the embodiments of the present disclosure belong. Further, terms, such as those defined in commonly used dictionaries, should be interpreted as having meanings that are consistent with their definitions in the context of the relevant art and should not be interpreted in an idealized or overly formal sense unless expressly so defined herein.

For example, an electronic device according to an embodiment of the present disclosure may include a smart phone, a tablet PC, a mobile phone, a video phone, an e-book reader, a desktop PC, a laptop PC, a netbook computer, a workstation, a server, a personal digital assistant (PDA), an electronic dictionary, a portable multimedia player (PMP), an MP3 player, a mobile medical device, a camera, a camcorder, or a wearable device (e.g., smart glasses, a head-mounted-device (HMD), electronic clothing, an electronic bracelet, an electronic necklace, an electronic App accessory (or appcessory), an electronic tattoo, a smart mirror, or a smart watch.).

As another example, the electronic device may be a smart home appliance, such as a television (TV), a digital video disk (DVD) player, an audio player, a refrigerator, an air conditioner, a cleaner, an oven, a microwave oven, a washer, an air purifier, a set-top box, a home automation control panel, a security control panel, a TV box (e.g., a Samsung HomeSync®, an Apple TV®, or a Google TV®), a game console (e.g., Xbox® or PlayStation®), an electronic key, or a digital photo frame.

As another example, the electronic device may also include various medical devices (e.g., portable medical meters, such as a blood glucose meter, a heart rate meter, a blood pressure meter, a temperature meter, etc., a magnetic resonance angiography (MRA) device, a magnetic resonance imaging (MRI) device, a computed tomography (CT) device, a medical camcorder, an ultrasonic device, etc.), a navigation device, a global positioning system (GPS) receiver, an event data recorder (EDR), a flight data recorder (FDR), an automotive infotainment device, a marine electronic device (e.g., a marine navigation device, a gyro compass, etc.), avionics, a security device, a car head unit, an industrial or home robot, an automatic teller machine (ATM) for banks, a point of sales (POS) device for a shop, or an internet of things (IoT) device (e.g., an electronic bulb, various sensors, an electricity or gas meter, a sprinkler device, a fire alarm, a thermostat, a streetlamp, a toaster, fitness equipment, a hot-water tank, a heater, a boiler, etc.).

The electronic device may also include a part of the furniture or building/structure, an electronic board, an electronic signature receiving device, a projector, and/or various meters (e.g., meters for water, electricity, gas or radio waves).

The electronic device may also be a flexible electronic device.

Further, the electronic device may be a combination of the above-described or other devices.

Herein, the term "user" may refer to a person who uses the electronic device, or a device (e.g., an intelligent electronic device) that uses the electronic device.

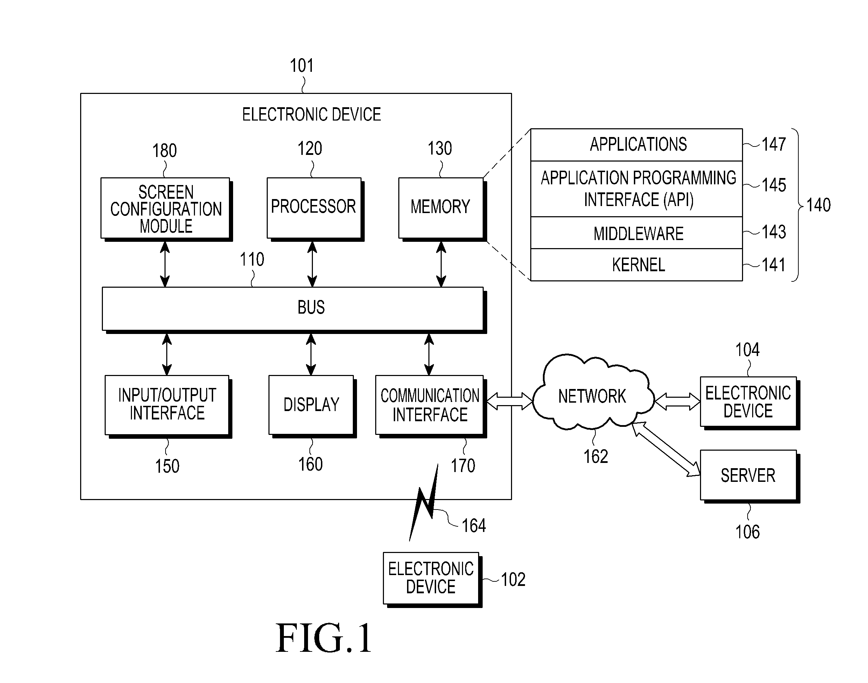

FIG. 1 illustrates a network environment including an electronic device according to an embodiment of the present disclosure.

Referring to FIG. 1, an electronic device 101 includes a bus 110, a processor 120, a memory 130, an input/output (I/O) interface 150, a display 160, a communication interface 170, and a screen configuration module 180. Alternatively, the electronic device 101 may exclude at least one of these identified components, and/or may include at least one additional component.

The bus 110 may include, for example, a circuit that connects the processor 120, the memory 130, the I/O interface 150, the display 160, the communication interface 170, and the screen configuration module 180 to each other, and transfers communication (e.g., a control message and/or data) therebetween.

The processor 120 may include one or more of a central processing unit (CPU), an application processor (AP), or a communication processor (CP). For example, the processor 120 executes a control and/or communication-related operation or data processing for at least one other component of the electronic device 101. The processor 120 may be referred to as a controller, or may include a controller as a part thereof.

The memory 130 may include a volatile and/or non-volatile memory. For example, the memory 130 stores a command or data related to at least one other component of the electronic device 101, and software and/or a program 140.

The program 140 includes a kernel 141, a middleware 143, an application programming interface (API) 145, and applications 147. At least some of the kernel 141, the middleware 143, or the API 145 may be referred to as an OS.

For example, the kernel 141 controls or manages system resources that are used to execute an operation or function implemented in other programs (e.g., the middleware 143, the API 145, or the application program 147. Further, the kernel 141 may provide an interface through which the middleware 143, the API 145 or the application program 147 can control or manage the system resources by accessing the individual components of the electronic device 101.

For example, the middleware 143 performs an intermediary role for the API 145 or the application program 147 to exchange data with the kernel 141. Further, with respect to work requests received from the applications 147, the middleware 143 may perform control (e.g., scheduling or load balancing) for the work requests by using a method of assigning a priority for using the system resources of the electronic device 101 to anyone of the applications 147.

The API 145 may be an interface by which the applications 147 control the function provided in the kernel 141 or the middleware 143, and may include at least one interface or function (e.g., a command) for file control, window control, image processing, character control, etc.

As used herein, the term "application" may also be referred to as an application program.

The I/O interface 150 may serve as an interface that transfers a command or data received from the user or another external device to the other components of the electronic device 101. Further, the I/O interface 150 may output a command or data received from the other components of the electronic device 101 to the user or another external device.

The display 160 may include a liquid crystal display (LCD) display, a light emitting diode (LED) display, an organic light emitting diode (OLED) display, a micro-electromechanical systems (MEMS) display, and/or an electronic paper display. The display 160 may display a variety of content for the user. The display 160 may include a touch screen for receiving a touch input, a gesture input, a proximity input, and/or a hovering input made by an electronic pen or a finger.

The communication interface 170 may establish communication between the electronic device 101 and an external device (e.g., a first external electronic device 102, a second external electronic device 104, or a server 106). For example, the communication interface 170 may communicate with the second external electronic device 104 or the server 106 through a network 162 by wireless communication or wired communication.

Examples of the wireless communication may include long term evolution (LTE), long term evolution-advanced (LTE-A), code division multiple access (CDMA), wideband code division multiple access (WCDMA), universal mobile telecommunication system (UMTS), wireless broadband (WiBro) or global system for mobile communication (GSM), as a cellular communication protocol.

Examples of the wired communication may include universal serial bus (USB), high definition multimedia interface (HDMI), recommended standard 232 (RS-232), or plain old telephone service (POTS).

The network 162 may include a telecommunications network, e.g., a local area network (LAN) or a wide area network (WAN, the Internet, or the telephone network.

In addition, the electronic device 101 may be connected to the first external electronic device 102 by wires or wirelessly. For example, the electronic device 101 may form a connection to the first external electronic device 102 using short-range communication techniques such as Bluetooth, Bluetooth low energy (BLE), Wi-Fi direct, Zigbee, near field communication (NFC), infrared communication, visible light communication, etc.

Each of the first and second external electronic devices 102 and 104 may be a device that is the same as or different from the electronic device 101.

The server 106 may include one or more groups of servers.

All or some of the operations executed in the electronic device 101 may also be executed in one or multiple other electronic devices (e.g., the first and second electronic devices 102 and 104 or the server 106).

If the electronic device 101 should perform a certain function or service (automatically or upon request), the electronic device 101 may request at least some of the functions related thereto from other electronic devices (e.g., the first electronic device 102, the second electronic device 104, or the server 106), instead of or in addition to spontaneously executing the function or service. The other electronic devices may execute the requested function or additional function, and deliver the results to the electronic device 101. The electronic device 101 may process the received results intact or additionally, thereby providing the requested function or service. For example, cloud computing, distributed computing, or client-server computing technology may be used.

The screen configuration module 180 may support the operation of the electronic device 101 by performing at least one of the operations (or functions) implemented in the electronic device 101.

The screen configuration module 180 may process at least some of the information obtained from the other components (e.g., the processor 120, the memory 130, the I/O interface 150, the communication interface 170, etc.), and use the processed information in various ways. For example, the screen configuration module 180 may control the electronic device 101 to interwork with the first electronic device 102, the second electronic device 104, or the server 106, independently or through the processor 120.

The screen configuration module 180 may be integrated into the processor 120 or the communication interface 170.

Further, at least one component of the screen configuration module 180 may be included in the server 106, and at least one operation implemented in the screen configuration module 180 may be supported by the server 106.

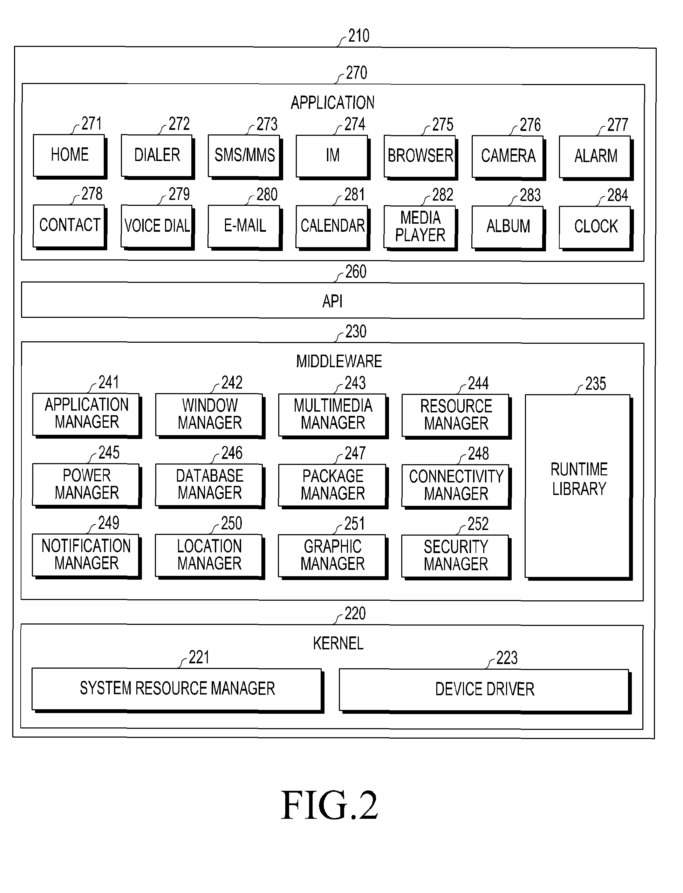

FIG. 2 illustrates a program module according to an embodiment of the present disclosure.

Referring to FIG. 2, a program module 210, which may be used as the program 140 illustrated in FIG. 1, includes an OS for controlling the resources related to an electronic device, and/or a variety of applications that run on the operating system. Examples of the OS may include Android®, iOS®, Windows®, Symbian®, Tizen®, and Bada®.

The program module 210 includes a kernel 220, a middleware 230, an API 260, and/or an application(s) 270. At least a part of the program module 210 may be preloaded on the electronic device, or downloaded from a server.

The kernel 220 includes, for example, a system resource manager 221 and a device driver 223. The system resource manager 221 may control, allocate or recover the system resources. The system resource manager 221 may include a process manager, a memory manager, a file system manager, etc. The device driver 223 may include, for example, a display driver, a camera driver, a Bluetooth driver, a shared memory driver, a USB driver, a keypad driver, a wireless fidelity (WiFi) driver, an audio driver, or an inter-process communication (IPC) driver.

The middleware 230 may provide a function that is required in common by the application(s) 270, or may provide various functions to the application(s) 270 through the API 260 so that the application(s) 270 may efficiently use the limited system resources within the electronic device. The middleware 230 includes a runtime library 235, an application manager 241, a window manager 242, a multimedia manager 243, a resource manager 244, a power manager 245, a database manager 246, a package manager 247, a connectivity manager 248, a notification manager 249, a location manager 250, a graphic manager 251, or a security manager 252.

The runtime library 235 may include a library module that a compiler uses to add a new function through a programming language while the application 270 is run. The runtime library 235 may perform an I/O management function, a memory management function, an arithmetic function, etc.

The application manager 241 may manage the life cycle of at least one of the application(s) 270.

The window manager 242 may manage graphic user interface (GUI) resources that are used on the screen.

The multimedia manager 243 may determine the format related to playback of various media files, and encode or decode the media files using a codec for the format.

The resource manager 244 may manage resources such as a source code, a memory or a storage space for any one of the application(s) 270.

The power manager 245 may manage the battery or power by operating with, for example, the basic input/output system (BIOS), and provide power information related to an operation of the electronic device.

The database manager 246 may create, search or update the database that is to be used by at least one of the application(s) 270.

The package manager 247 may manage installation or update of applications that are distributed in the form of a package file.

The connectivity manager 248 may manage wireless connection.

The notification manager 249 may display or notify evens such as message arrivals, appointments, and proximity notifications.

The location manager 250 may manage the location information of the electronic device.

The graphic manager 251 may manage the graphic effect to be provided to the user, or the user interface related thereto.

The security manager 252 may provide various security functions related to the system security or user authentication.

Alternatively, if the electronic device includes a phone function, the middleware 230 may further include a telephony manager for managing the voice or video call function of the electronic device.

The middleware 230 may also include a middleware module that forms a combination of various functions of the above-described components. The middleware 230 may provide a module specialized for the type of the operating system in order to provide a differentiated function. Further, the middleware 230 may dynamically remove some of the existing components, or add new components.

The API 260 is a set of API programming functions, and may be provided in a different configuration depending on the operating system. For example, for Android®, iOS®, or Windows®, the API 260 may provide one API set per platform, and for Tizen®, the API 260 may provide two or more API sets per platform.

The application(s) 270 may include one or more applications that provide functions, i.e., a home 271, a dialer 272, a short message service/multimedia messaging service (SMS/MMS) 273, an instant message (IM) 274, a browser 275, a camera 276, an alarm 277, a contact 278, a voice dial 279, an Email 280, a calendar 281, a media player 282, an album 283, and a clock 284. The application(s) 270 may also include a healthcare application (e.g., for measuring the quantity of exercise, the blood glucose or the like), or an environmental information provision application (e.g., for providing information about the atmospheric pressure, the humidity, temperature, etc.).

The application(s) 270 may include an application for supporting information exchange between the electronic device and external electronic devices (hereinafter, referred to as an "information exchange application"). The information exchange application may include a notification relay application for delivering specific information to the external electronic devices, or a device management application for managing the external electronic devices.

For example, the notification relay application includes a function of delivering notification information generated in other applications (e.g., an SMS/MMS application, an Email application, a healthcare application, an environmental information application or the like) of the electronic device, to external electronic devices.

Further, the notification relay application may receive notification information from an external electronic device, and provide the received notification information to the user.

The device management application may manage at least one function (e.g., a function of adjusting the turn-on/off of the external electronic device itself (or some components thereof) or the brightness (or the resolution) of the display) of the external electronic device (e.g., the electronic devices 102 and 104) communicating with the electronic device, and may manage (e.g., install, delete or update) an application operating in the external electronic device or a service (e.g., a call service or a messaging service) provided in the external electronic device.

The application(s) 270 may also include an application (e.g., a healthcare application) that is specified depending on the attributes (e.g., the attributes of an electronic device, the type of which is a mobile medical device) of the external electronic device (e.g., the electronic devices 102 and 104).

Further, the application(s) 270 may include an application received or downloaded from an external electronic device. For example, the application(s) 270 may include a preloaded application or a third party application that can be downloaded from the server.

The names of the components of the program module 210 may vary depending on the type of the OS.

At least a part of the program module 210 may be implemented by software, firmware, hardware or a combination thereof. For example, at least a part of the program module 210 may be implemented by a processor or may include a module, a program, a routine, an instruction set or a processor, for performing one or more functions.

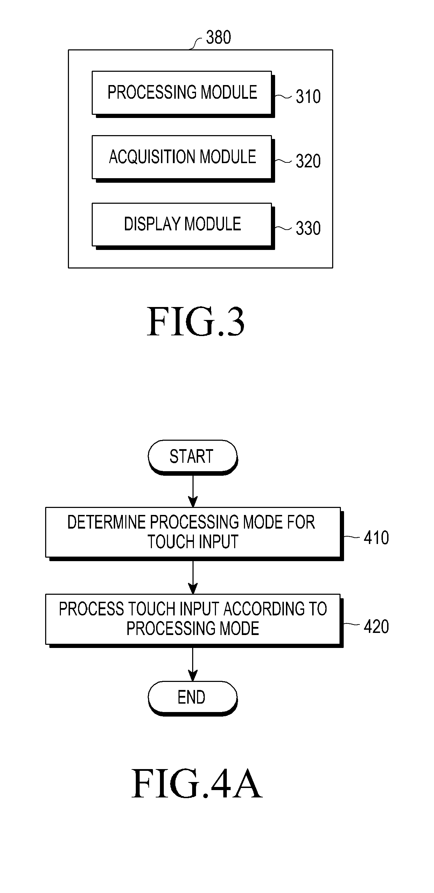

FIG. 3 illustrates a screen configuration module of an electronic device according to an embodiment of the present disclosure.

Referring to FIG. 3, the screen configuration module 380 includes a processing module 310, an acquisition module 320, and a display module 330. The screen configuration module 380 may be provided independently of a processor, or may be at least partially integrated in the processor.

The acquisition module 320 may obtain or acquire a touch input made on a touch screen.

The processing module 310 may determine a first processing mode among a plurality of processing modes for a touch input, and process the obtained touch input based on the first processing mode.

Examples of a touch input include a stationary touch input, and a moving touch input such as a drag gesture, a swipe gesture or a flick gesture. In addition, the touch input may be one stationary touch input or one moving touch input, or may be multiple stationary touch inputs, multiple moving touch inputs, or a combination of stationary touch inputs and moving touch inputs.

A first processing mode according to an embodiment of the present disclosure may be a touch mode for processing an event that is previously stored in association with the touch input.

The processing module 310 may process an event based on coordinates on a touch screen, at which a touch input is received, or may process the event based on at least one of an input direction and an input distance of the touch input. For example, the processing module 310 may process a function related to an object corresponding to the coordinates on the touch screen.

Further, the processing module 310 may run an application corresponding to an icon positioned at the coordinates on the touch screen.

Further, the processing module 310 may process an event (e.g., zoom in/out) that is previously stored in association with at least one of an input direction and an input distance of the touch input.

A function related to an object may be defined in an application, or defined in the OS, such as the middleware, and those skilled in the art will readily understand that there is no limit to the type thereof.

The display module 330 may display the associated event. In addition to the display module 330, various output modules such as a speaker or indicator light may output the associated event.

A first processing mode according to an embodiment of the present disclosure may be a touchpad mode for changing a position of a displayed cursor based on a touch input. In the touchpad mode, the position of the displayed cursor may be changed based on at least one of an input distance and an input direction of the touch input. The processing module 310 may determine a position of the cursor displayed on the touch screen based on the input distance of the touch input. The display module 330 may display the cursor on the display in response to the determined position.

The processing module 310 may control the display module 330 to display the cursor at a position where the cursor was last placed or at a position specified by the touch input, when the electronic device enters the first processing mode.

The acquisition module 320 may obtain a cursor attribute change command for changing an attribute of the cursor. The processing module 310 may control the display module 330 to change the displayed cursor based on the cursor attribute change command.

The acquisition module 320 may obtain a mode switching command for switching between the plurality of processing modes. The processing module 310 may switch from the first processing mode to a second processing mode based on the mode switching command, and process the touch input based on the second processing mode.

A mode switching command according to an embodiment of the present disclosure includes a multi-touch input including a plurality of sub-touch inputs. For the mode switching command, the processing module 310 may determine a first sub-touch input corresponding to a first finger of a user among the plurality of sub-touch inputs. More specifically, the processing module 310 may determine a relative position relationship between the plurality of sub-touch inputs, and determine the first sub-touch input based on a previously stored finger position relationship and the determined relative position relationship.

The second processing mode may be a touchpad mode for controlling the cursor displayed on the touch screen based on the touch input, and the processing module 310 may control the display module 330 to display the cursor at a position corresponding to the position of the first sub-touch input.

The acquisition module 320 may detect a connection of an electronic input device to the electronic device, i.e., that the electronic input device is connected to the electronic device. The processing module 310 may determine the first processing mode as a touch mode for processing an event that is previously stored in association with the touch input, based on the touch input.

The acquisition module 320 may detect an entry of the electronic device into a sleep state, i.e., that the electronic device has entered the sleep state. The processing module 310 may determine the first processing mode as a touch mode for processing an event that is previously stored in association with the touch input, based on the touch input.

The processing module 310 may control the display module 330 to display a lock screen in response to switching to a wakeup mode after the entry of the electronic device into the sleep state. The processing module 310 may determine the first processing mode as a touch mode for processing an event that is previously stored in association with the touch input, based on the touch input. The processing module 310 may release the lock screen based on a touch input that is made on the lock screen, and determine the first processing mode as a processing mode that was set before the entry of the electronic device into the sleep state.

The processing module 310 may determine the first processing mode based on at least one of a resolution and a display mode of a screen image being displayed on the touch screen.

The acquisition module 320 may obtain a touch input including a plurality of sub-touch inputs. The processing module 310 may determine a first sub-touch input corresponding to a first finger of a user among the plurality of sub-touch inputs.

The processing module 310 may determine a relative position relationship between the plurality of sub-touch inputs. The processing module 310 may determine the first sub-touch input based on a previously stored finger position relationship and the determined relative position relationship.

In accordance with an embodiment of the present disclosure, a first finger may be a forefinger (or an index finger) of the user. The processing module 310 may determine a pair of an adjacent sub-touch input and a sub-touch input having a longest distance therefrom as a pair of a sub-touch input corresponding to a thumb and a sub-touch input corresponding to a forefinger. The processing module 310 may determine one of the sub-touch input pairs as the first sub-touch input based on a position relationship between the plurality of sub-touch inputs.

The acquisition module 320 may obtain a touch input including a stationary sub-touch input and a moving sub-touch input. The processing module 310 may process the touch input based on an input distance and an input direction of the moving sub-touch input. The processing module 310 may determine a position of a cursor based on the input distance and the input direction of the moving sub-touch input, and control the display module 330 to display the cursor at the determined position.

The acquisition module 320 may obtain a floating input. The processing module 310 may determine a first processing mode among a plurality of processing modes for the floating input, and process the obtained floating input based on the first processing mode.

FIG. 4A is a flowchart illustrating a control method of an electronic device according to an embodiment of the present disclosure.

Referring to FIG. 4A, in step 410, the electronic device determines a processing mode for a touch input. A plurality of processing modes for a touch input may be set in advance in the electronic device. For example, a touch mode may be set in the electronic device for processing an event that is previously stored in association with the touch input. In addition, a touchpad mode may be set in the electronic device for controlling a cursor displayed on the touch screen based on the touch input. For example, the electronic device may determine one processing mode among the touch mode and the touchpad mode.

In step 420, the electronic device processes the touch input according to the determined processing mode. For example, the electronic device may determine the touch mode as a processing mode, and in this case, process an event that is previously stored in association with the touch input. For example, the electronic device may determine the touchpad mode as a processing mode, and in this case, the electronic device may move the displayed cursor based on the touch input.

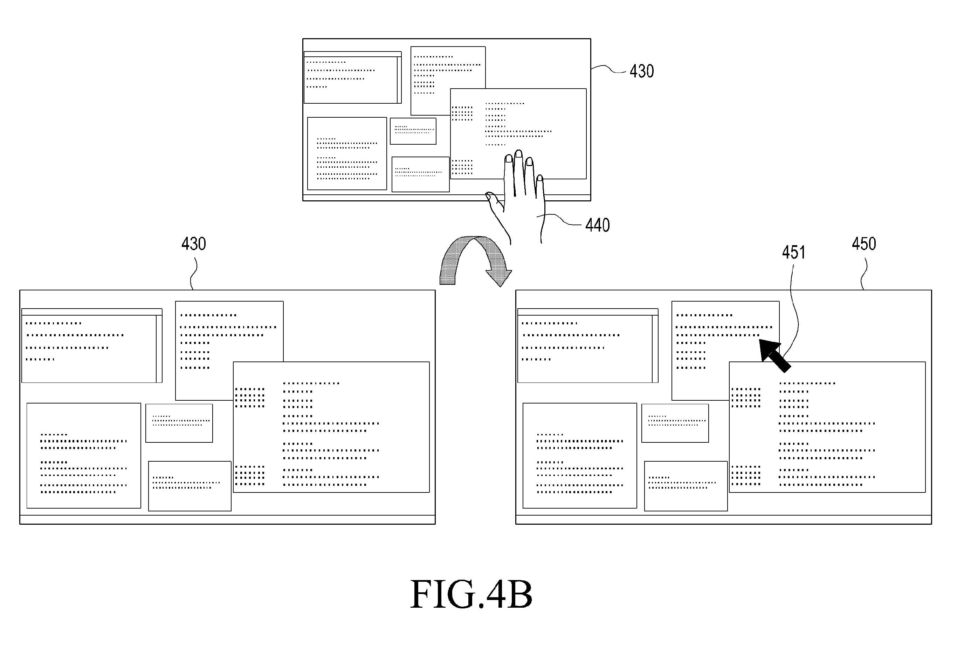

FIG. 4B illustrates a plurality of processing modes according to an embodiment of the present disclosure.

Referring to FIG. 4B, the electronic device displays a screen image 430 corresponding to the touch mode and a screen image 450 corresponding to the touchpad mode. For example, the screen image 450 corresponding to the touchpad mode includes a cursor 451. As will be described below in more detail, the processing mode may be switched (from the touch mode to the touchpad mode), e.g., if the user enters a plurality of tap signals 440.

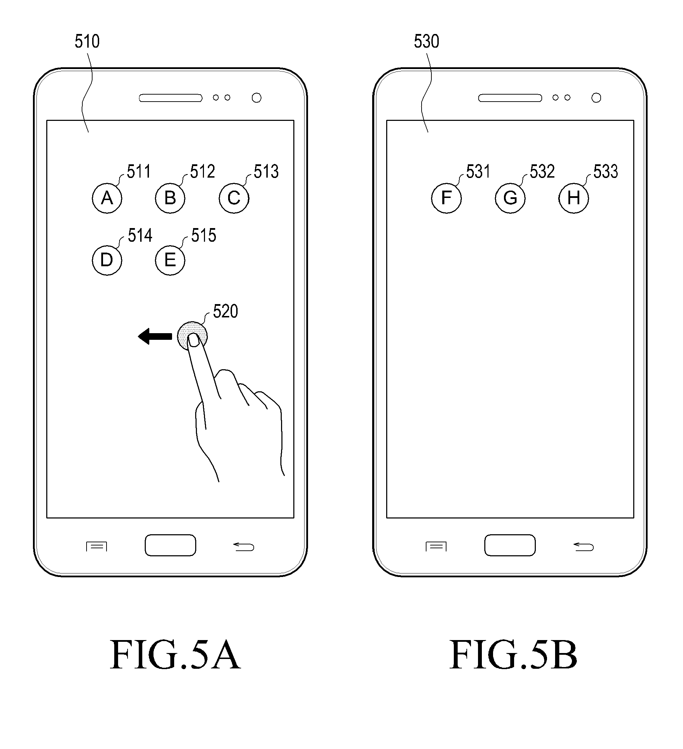

FIGs. 5A and 5B illustrate operations of a touch mode according to an embodiment of the present disclosure.

Referring to FIG. 5A, the electronic device displays a menu screen 510 including icons 511 to 515 that correspond to different applications. The menu screen 510 may be referred to as a launcher application execution screen depending on the implementation.

In response to a touch input designating one of the icons 511 to 515, the electronic device runs an application corresponding to the designated icon.

More specifically, the electronic device may determine the coordinates on the touch screen at which the touch input is made, identify an icon corresponding to the determined coordinates, and run an application corresponding to the icon.

Further, the electronic device may obtain a touch input 520 of a flick gesture as illustrated in FIG. 5A. In the touch mode, the electronic device may process the flick gesture made on the menu screen 510 as a page switching event. That is, by processing an event associated with the touch event 520, i.e., performing a page switching event in response to the flick gesture, the electronic device displays a menu screen 530 of a next page, including icons 531 to 533, as illustrated in FIG. 5B. The icons 531 to 533, similar to icons 511 to 515, run corresponding applications upon designation thereof.

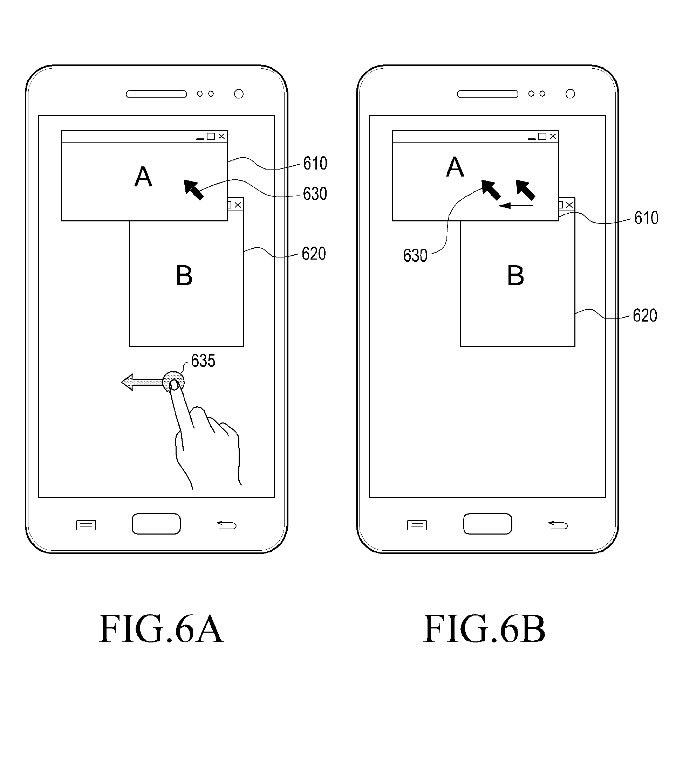

FIGs. 6A to 6H illustrate operations of a touchpad mode according to an embodiment of the present disclosure.

As described above, in the touchpad mode, the electronic device may process a touch input, e.g., move a displayed cursor, based on an input distance and an input direction of the obtained touch input.

Referring to FIG. 6A, the electronic device displays a first window 610 and a second window 620. The first window 610 includes an application execution screen A, and the second window 620 includes an application execution screen B. The electronic device 101 displays the first window 610 to cover (overlap) the second window 620.

More specifically, at the portion where the first window 610 overlaps the second window 620, the electronic device displays the first window 610 and does not display the second window 620. That is, the electronic device provides a visual effect as if the first window 610 is on top of the second window 620.

The electronic device also displays a cursor 630 for indicating, moving, or selecting an object displayed on the electronic device. A user may move the cursor 630 based on a move command.

In addition, upon receiving a designation command, i.e., a selecting command, the electronic device may process an event associated with an object corresponding to the current position of the cursor 630. For example, if the cursor 630 is position over an application icon when a designation command is received, the electronic device may execute the application.

In the touchpad mode, based on a touch input 635, the electronic device changes the position of the cursor 630 as illustrated in FIG. 6B. The touch input 635 may be, for example, a flick gesture.

The electronic device may obtain an input direction and an input distance of the touch input 635, and based on the input direction and the input distance, the electronic device may determine a moving direction and a moving distance of the cursor 630. Thereafter, the electronic device may change the position of the displayed cursor 630 based on the determined moving direction and moving distance.

The electronic device may determine the moving distance of the cursor 630 in proportion to the input distance of the touch input 635, may determine the moving distance of the cursor 630 from the input distance of the touch input 635 based on the predetermined moving speed of the cursor 630, and/or may determine the moving direction of the cursor 630 to be substantially the same as the input direction of the touch input 635.

As described above, the electronic device differently process the same flick gesture according to the current processing mode. Particularly, in the touchpad mode, the electronic device moves the position of the displayed cursor based on the touch input, but in the touch mode, the electronic device process an event associated with the touch input. Accordingly, when the electronic device displays a higher-resolution screen image on a relatively small display of the electronic device, in order to accurately designate a small-size menu or a small-size icon, the user may select the touchpad mode, in order to select the small item using a small tip cursor rather than a larger finger tip. In addition, when the electronic device displays a lower-resolution screen image, the user may select the touch mode for fast touch screen selection.

The electronic device may determine a processing mode based on at least one of a resolution and a display mode of the displayed screen image. For example, the electronic device may determine the processing mode as a touchpad mode, if the electronic device is displaying a screen image having a resolution that exceeds a predetermined threshold.

In addition, the electronic device may determine the processing mode as a touch mode, if the electronic device is displaying a screen image having a resolution that is less than or equal to the predetermined threshold.

As another example, if the display mode is identified as a display mode for a mobile electronic device, the electronic device may determine the processing mode as a touch mode. However, if the display mode is determined as a display mode for a PC, e.g., when a user of the electronic device remote accesses a PC, the electronic device may determine the processing mode as a touchpad mode.

As described above, the electronic device 101 may determine the processing mode according to the user's selection, or may determine the processing mode based on at least one of the resolution and the display mode.

The example illustrated in FIGs. 6A and 6B, that in the touchpad mode, the electronic device changes the position of the displayed cursor based on the touch input is merely illustrative. The electronic device may be connected to another electronic device for display, and the data from the electronic device may be displayed on the another electronic device for display. The electronic device may change the position of the cursor on the another electronic device, based on received touch input.

Further, the electronic device may be connected to the another electronic device, and may be used as an electronic input device by operating in the touchpad mode.

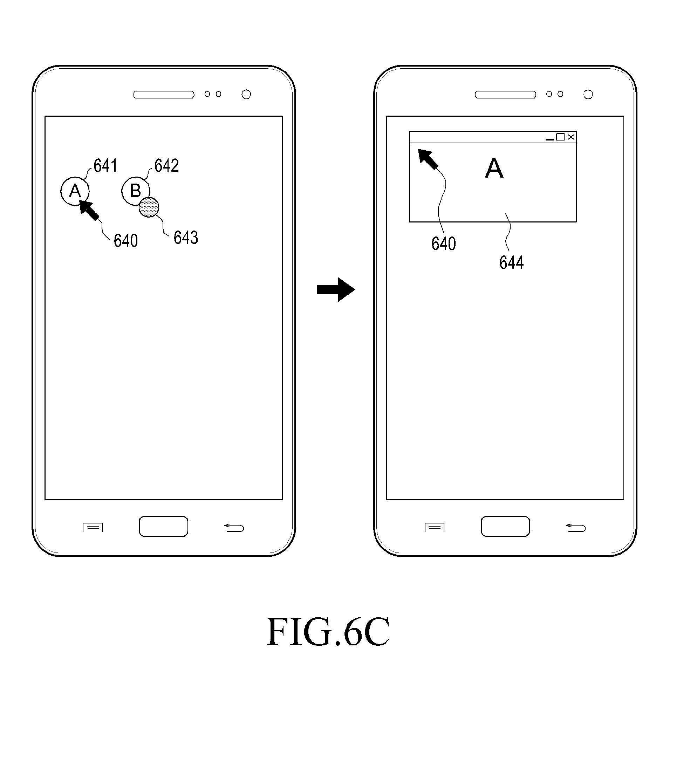

In the touchpad mode, the electronic device may receive a move command for a cursor, but also a designation command for a cursor. As illustrated in FIG. 6C, the electronic device displays a first icon 641, a second icon 642, and a cursor 640 positioned on the first icon 641. When the user enters a tap signal 643 on the second icon 642, , the electronic device processes the touch input as, for example, a command for clicking the left button in a mouse input. Accordingly, the electronic device may execute a window 644 corresponding to the first icon 641. Because the electronic device is set to the touchpad mode, even though the user enters a tap signal on the second icon 642, the electronic device executes the window 644 corresponding to the first icon 641 identified by the cursor 640 instead of executing a program corresponding to the second icon 642.

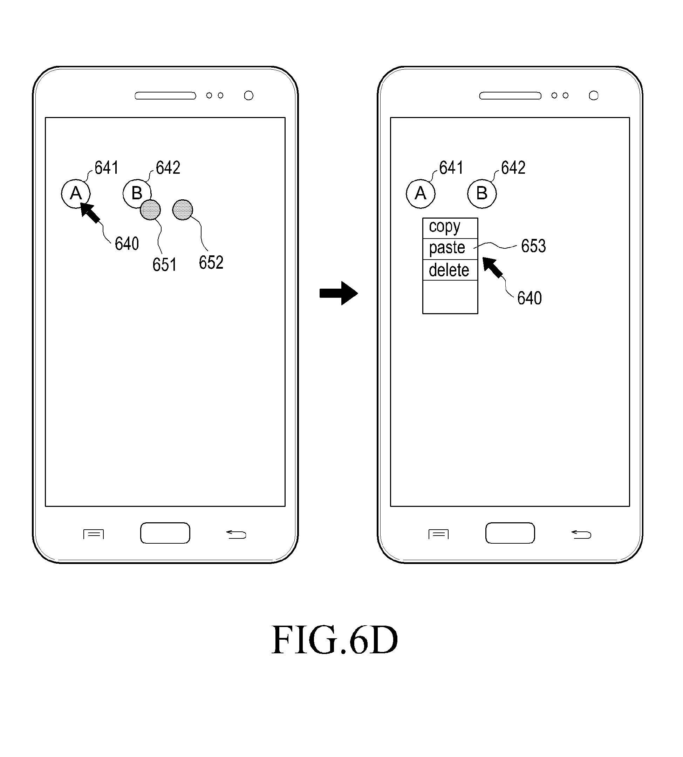

As illustrated in FIG. 6D, in response to a plurality of long touches 651 and 652 that are made on the touch screen, the electronic device process the touch inputs as, for example, a command for clicking the right button in a mouse input. Accordingly, the electronic device displays an Edit menu 653 for the first icon 641.

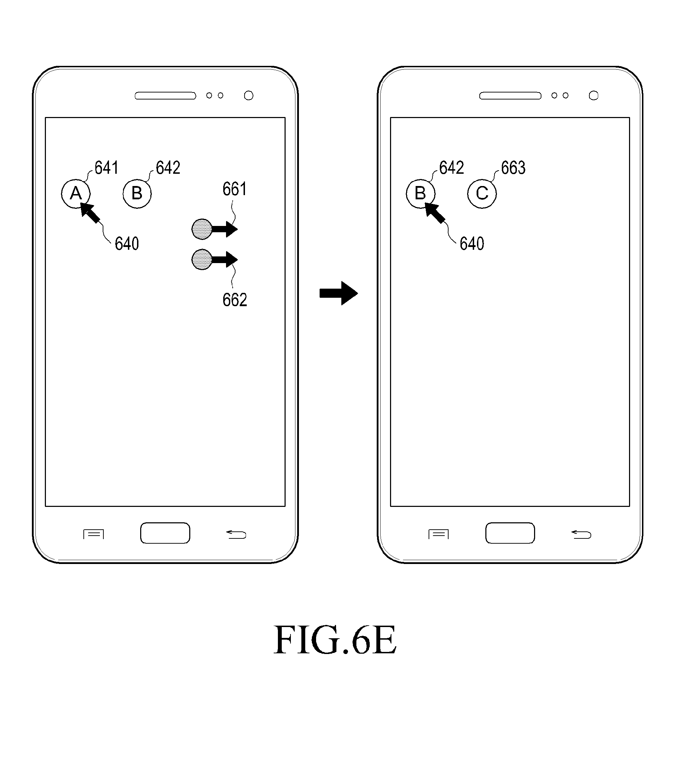

As illustrated in FIG. 6E, in response to a plurality of slide gestures 661 and 662 that are made on the touch screen, the electronic device process the touch inputs as, for example, a command for scrolling the screen. Accordingly, the electronic device displays a third icon 663 after scrolling the screen.

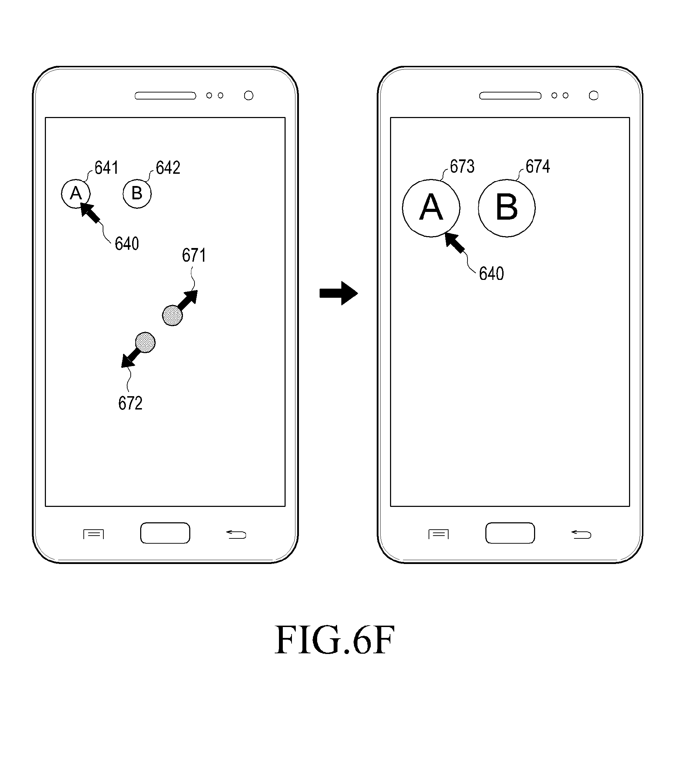

As illustrated in FIG. 6F, in response to pinch gestures 671 and 672 that are made on the touch screen, the electronic device processes the touch inputs as, for example, a zoom-in/out command for an object corresponding to the position of the cursor. Accordingly, the electronic device displays zoomed icons 673 and 674. The example in FIG. 6F, that the electronic device zooms in to display the small icons 641 and 642 as the larger icons 673 and 774 in response to the pinch gestures 671 and 672, is merely illustrative. For example, the object may the icons, and also other objects with various attributes such as video objects, image objects, font objects, etc. Accordingly, in response to a pinch gesture, the electronic device may adjust the size of the full screen image of the application, including the font objects, the image objects, etc.

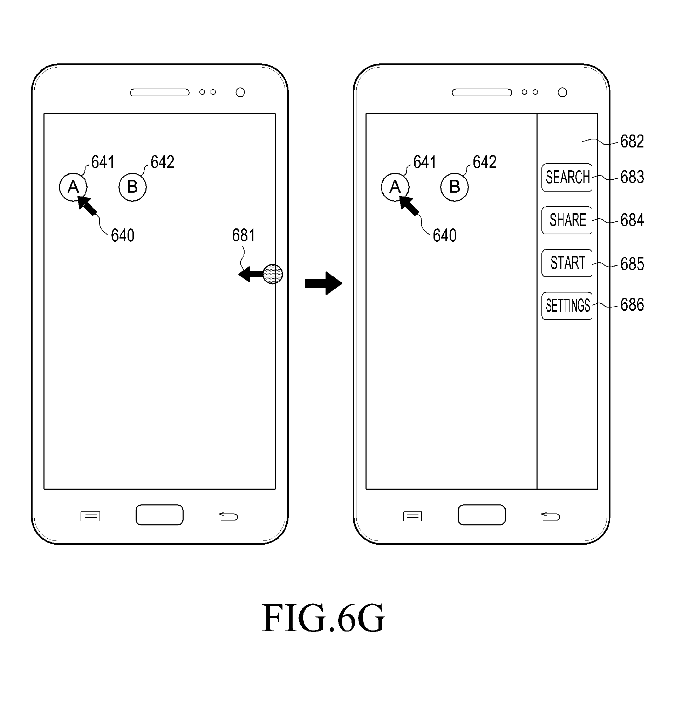

As illustrated in FIG. 6G, in response to a swipe gesture 681 that is made on the touch screen from the right bezel, the electronic device process the touch input as, for example, a command for displaying an additional window, such as a menu bar 682, or a command for switching the running program. The menu bar 682 includes a Search menu 683, a Share menu 684, a Start menu 685, and a Settings menu 676.

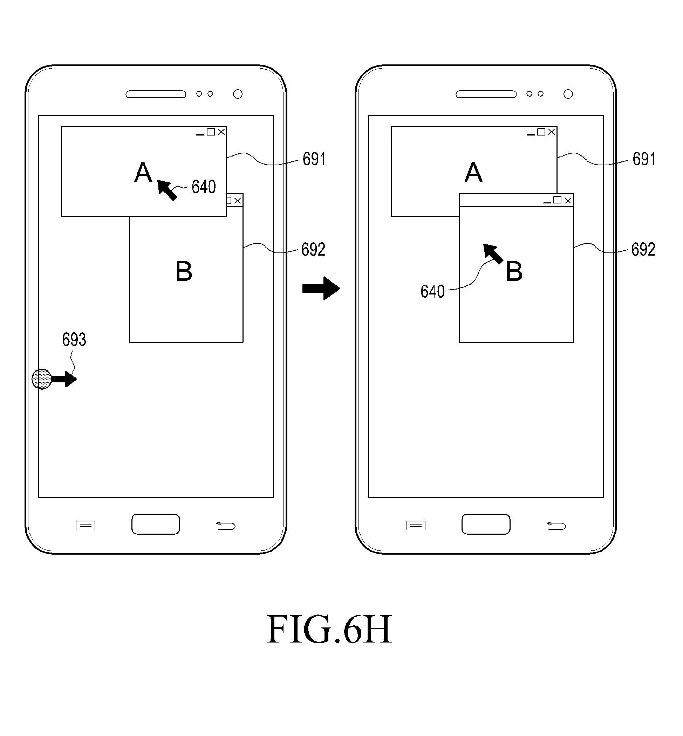

As illustrated in FIG. 6H, in response to a swipe gesture 693 that is made on the touch screen from the left bezel, the electronic device changes the foreground application from a first application 691 to a second application 692.

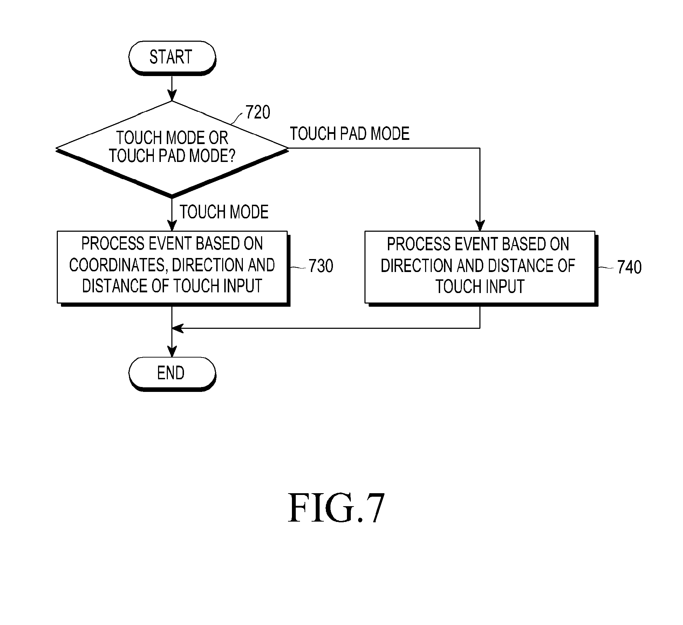

FIG. 7 is a flowchart illustrating a control method of an electronic device according to an embodiment of the present disclosure.

Referring to FIG. 7, in step 720, the electronic device determines whether the current processing mode is a touchpad mode or a touch mode.

In step 730, if the processing mode is the touch mode, the electronic device processes a touch input based on at least one of input coordinates, an input direction, and an input distance of the touch input. For example, the electronic device executes an application corresponding to an icon displayed at the position of the touch input.

However, in step 740, if the processing mode is the touchpad mode, the electronic device processes the touch input based on at least one of an input direction and an input distance of the touch input. For example, the electronic device displays a position of a cursor based on at least one of the input direction and input distance of the touch input.

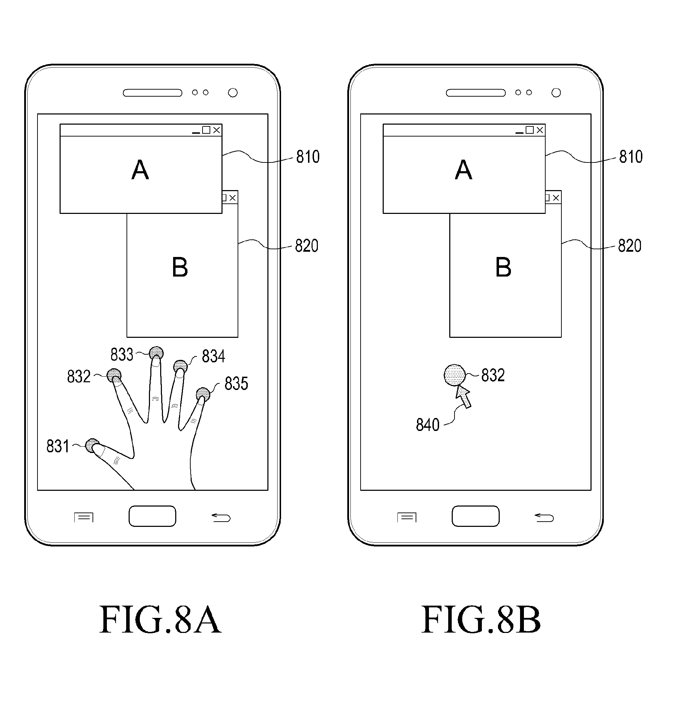

FIGs. 8A and 8B illustrate a mode switching command according to an embodiment of the present disclosure.

Referring to FIG. 8A, the electronic device, in the touch mode, displays a first window 810 and a second window 820.

When a predetermined number of sub-touch inputs 831 to 835 are detected, the electronic device performs mode switching in response thereto. More specifically, the electronic device determines whether the sub-touch inputs 831 to 835 are made at the same time.

For example, the electronic device determines that the sub-touch inputs 831 to 835 are made at the same time, if a difference in input time between the sub-touch inputs 831 to 835 is less than a predetermined threshold.

Alternatively, upon detecting a predetermined number of sub-touch inputs, the electronic device may determine that a predetermined pattern is entered, and perform mode switching in response thereto.

In response to the mode switching command, the electronic device performs mode switching from the touch mode to the touchpad mode, as illustrated in FIG. 8B. Accordingly, the electronic device displays a cursor 840.

In accordance with an embodiment of the present invention, the electronic device displays the cursor 840 in a position corresponding to the second sub-touch input 832. The second sub-touch input 832 may be determined as, for example, a sub-touch input corresponding to the user's forefinger. A process of determining a sub-touch input corresponding to a specific finger of the user will be described in more detail below.

The example of the electronic device displaying a cursor at the position corresponding to a specific sub-touch input is merely illustrative. For example, the electronic device may display the cursor 840 at the position where the cursor 840 was displayed last, or may display the cursor 840 at a predetermined cursor position.

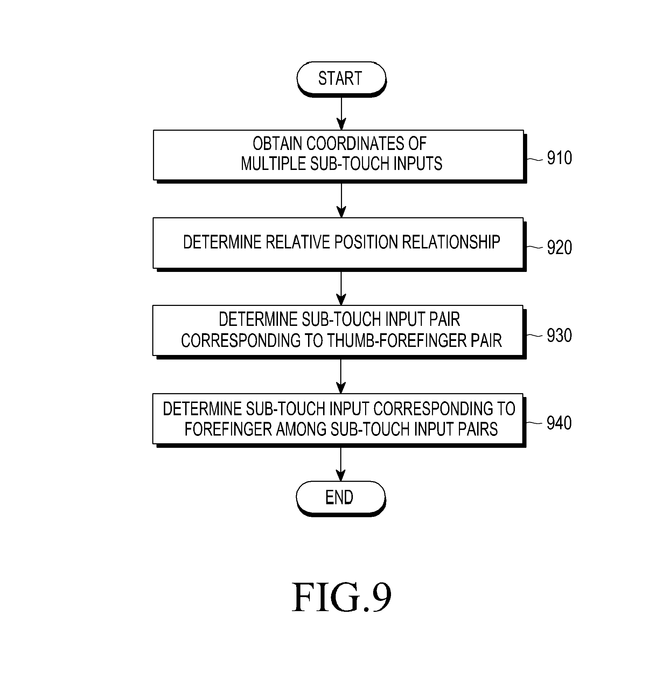

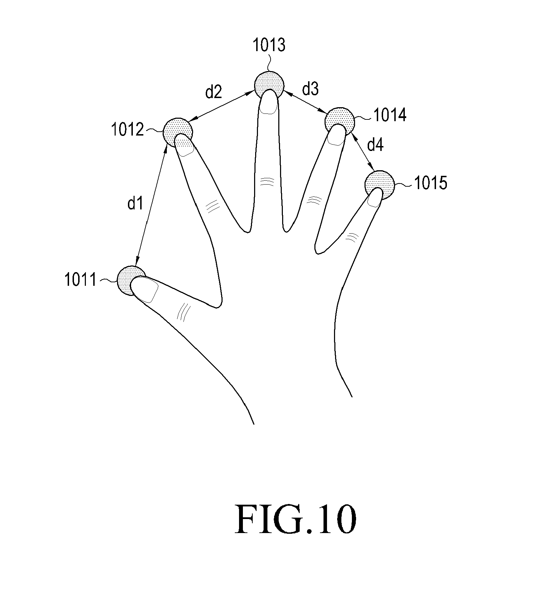

FIG. 9 is a flowchart illustrating a method for determining a sub-touch input corresponding to a specific user finger according to an embodiment of the present disclosure. FIG. 10 illustrates a relationship between fingers and touch inputs according to an embodiment of the present disclosure.

Referring to FIG. 9, in step 910, the electronic device receives a touch input including a plurality of sub-touch inputs, and identifies input coordinates of each sub-touch input. For example, the electronic device receives input coordinates $(x1,y1)$ of a first sub-touch input 1011, input coordinates $(x2,y2)$ of a second sub-touch input 1012, input coordinates $(x3,y3)$ of a third sub-touch input 1013, input coordinates $(x4,y4)$ of a fourth sub-touch input 1014 and input coordinates $(x5,y5)$ of a fifth sub-touch input 1015, as illustrated in FIG. 10.

In step 920, the electronic device determines a relative position relationship between the plurality of sub-touch inputs 1011 to 1015. For example, the electronic device determines a distance d1 between the first sub-touch input 1011 and the second sub-touch input 1012, a distance d2 between the second sub-touch input 1012 and the third sub-touch input 1013, a distance d3 between the third sub-touch input 1013 and the fourth sub-touch input 1014, and a distance d4 between the fourth sub-touch input 1014 and the fifth sub-touch input 1015. The distances d1 to d4 between sub-touch inputs may be determined using Equation (1).

$$d_i = \sqrt{(x_{i+1} - x_i)^2 + (y_{i+1} - y_i)^2} \quad \dots (1)$$

In Equation (1), *i* is an integer of 1 to 4.

In step 930, the electronic device determines a sub-touch input pair corresponding to the user's thumb and forefinger among the plurality of sub-touch inputs 1011 to 1015, e.g., based on a previously stored finger position relationship.

For example, the electronic device may compare distances d1 to d4 between sub-touch input pairs, and determine a sub-touch input pair having the maximum value as a sub-touch input pair corresponding to the user's thumb and forefinger.

As illustrated in FIG. 10, generally, for the user's fingers, the distance between the thumb and the forefinger is greater than the distance between other fingers. Accordingly, the electronic device may indentify the user's thumb and forefinger from the determined pair of adjacent sub-touch inputs having the greatest distance therebetween.

In step 940, the electronic device determines a sub-touch input corresponding to the forefinger among the identified sub-touch input pair.

For example, the electronic device may determine the first sub-touch input 1011 among the plurality of sub-touch inputs 1011 to 1015 as a sub-touch input corresponding to the thumb, and determine the second sub-touch input 1012 as a sub-touch input corresponding to the forefinger.

Alternatively, for the sub-touch inputs 1011 to 1015, the electronic device 101 may determine the positional relationship through the line connection as illustrated in FIG. 10, and may determine a sub-touch input corresponding to a specific finger according to its order.

The example of the electronic device determining a sub-touch input corresponding to the forefinger based on the distance between sub-touch input pairs is merely illustrative. The electronic device may also determine a sub-touch input corresponding to a specific finger based on the tilt and distance between sub-touch inputs.

As described above, the electronic device determines a sub-touch input corresponding to a specific finger, during a mode change input, and displays the cursor at an input point corresponding to a specific finger.

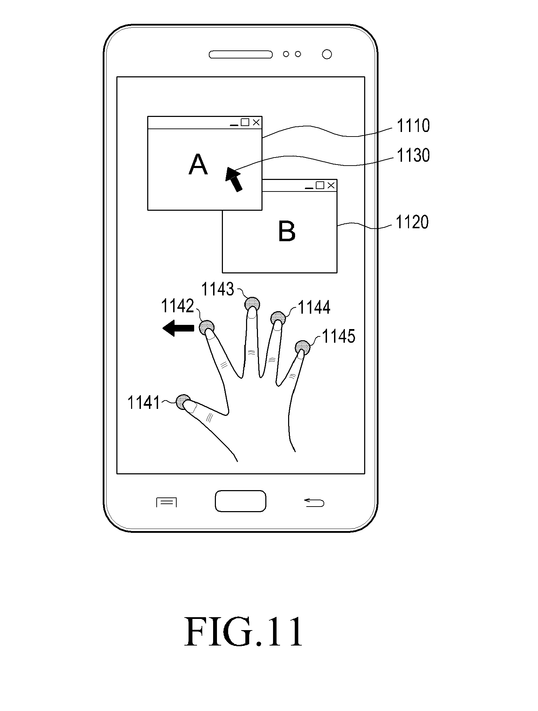

FIG. 11 illustrates operations of an electronic device according to an embodiment of the present disclosure.

Referring to FIG. 11, the electronic device displays a first window 1110 and a second window 1120. The electronic device receives stationary sub-touch inputs 1141, 1143, 1144 and 1145. In addition, the electronic device receives a moving sub-touch input 1142. Herein, a stationary touch input is a touch input at a contact point that does not change over a specified range over time. A moving touch input refers to a touch input at varying contact points over a specified range over time.

The electronic device may detect a simultaneous entry of the stationary sub-touch inputs 1141, 1143, 1144 and 1145 and the moving sub-touch input 1142.

In response, when in the touch mode, the electronic device enters the touchpad mode in response to the simultaneous entry of the stationary sub-touch inputs 1141, 1143, 1144 and 1145 and the moving sub-touch input 1142. In addition, the electronic device moves a displayed cursor 1130 so as to correspond to the moving sub-touch input 1142.

Conversely, when in the touchpad mode, the electronic device enters the touch mode, if the user stops the entry of the stationary sub-touch inputs 1141, 1143, 1144 and 1145, and the electronic device processes an event associated with the moving sub-touch input 1142, e.g., changes pages.

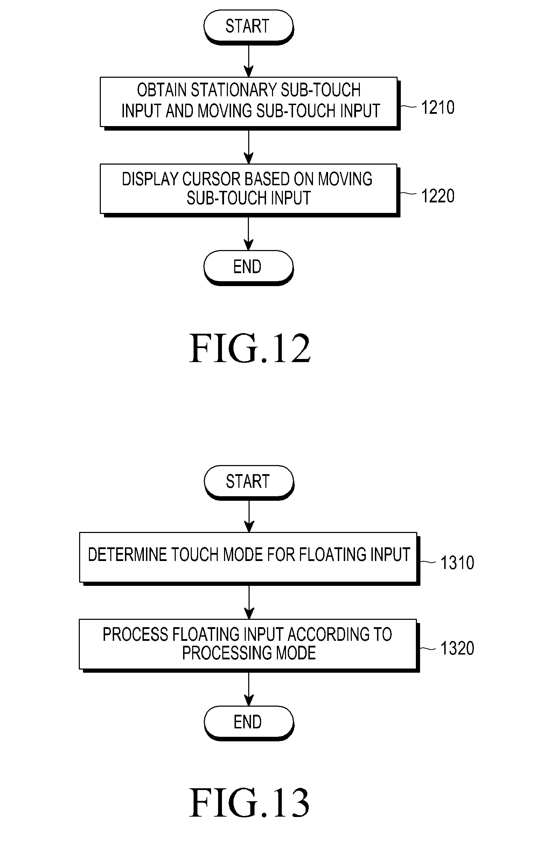

FIG. 12 is a flowchart illustrating a control method of an electronic device according to an embodiment of the present disclosure.

Referring to FIG. 12, in step 1210, the electronic device receives a stationary sub-touch input and a moving sub-touch input in the touch mode. In response, the electronic device enters the touchpad mode, and displays a cursor.

In step 1220, the electronic device moves the displayed cursor based on the received moving sub-touch input.

For example, the electronic device determines an input direction and an input distance of a moving sub-touch input, and determines a moving direction and a moving distance of the cursor based on the input direction and the input distance. The electronic device then changes the position of the displayed cursor based on the determined moving direction and moving distance.

The electronic device may determine the moving distance of the cursor in proportion to the input distance of the moving sub-touch input, may determine the moving distance of the cursor from the input distance of the moving sub-touch input based on the predetermined moving speed of the cursor, and/or may determine the moving direction of the cursor to be substantially the same as the input direction of the moving sub-touch input.

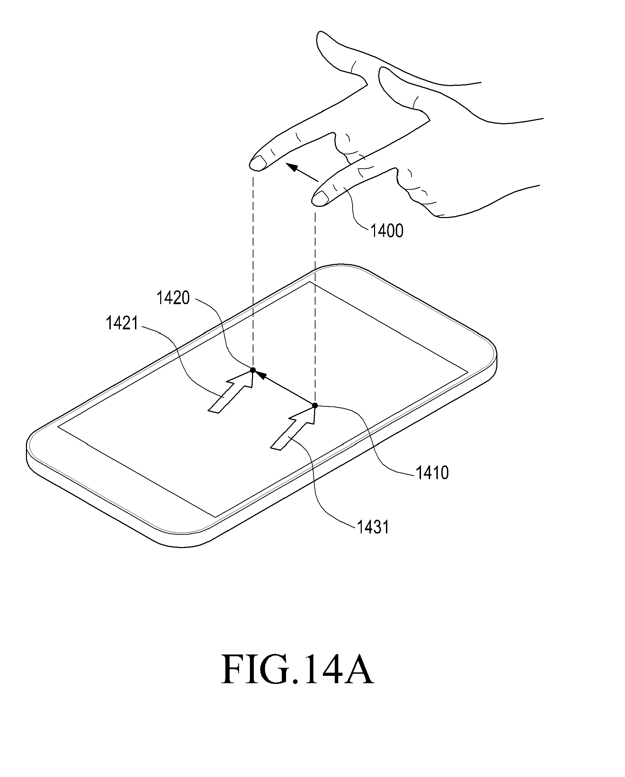

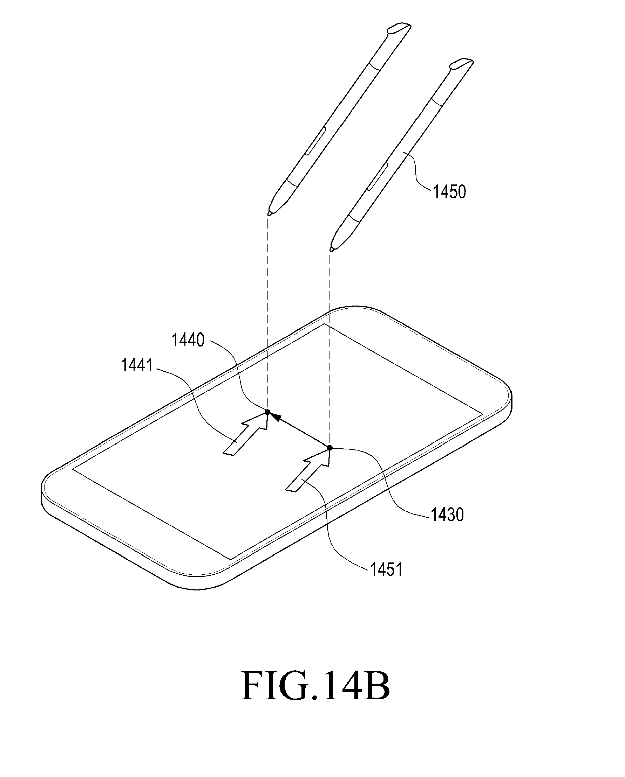

FIG. 13 is a flowchart illustrating a control method of an electronic device according to an embodiment of the present disclosure. FIGs. 14A and 14B illustrate a floating input according to an embodiment of the present disclosure.

Referring to FIG. 13, in step 1310, the electronic device determines a processing mode for a floating input. The term "floating input" refers to an input that is detected by the electronic device while the user's finger is not in contact with the electronic device, e.g., a hovering input or air-view.

For example, as illustrated in FIG. 14A, a finger 1400 of the user moves in a horizontal direction while not in contact with the electronic device. The electronic device detects the movement of the finger 1400 in the horizontal direction while not in contact with the electronic device. For example, a camera module of the electronic device may capture and detect the movement of the finger 1400 in the horizontal direction. Alternatively, the electronic device may detect the movement of the finger 1400 in the horizontal direction using a gesture sensor, such as a touch screen, an ultrasonic sensor and a proximity sensor, which can detect the position of the finger 1400.

In step 1320, the electronic device processes the floating input according to the processing mode. For example, the processing mode may include a floating mode and a floating pad mode. In the floating mode, the electronic device processes an event associated with the coordinates 1410 or 1420 corresponding to the floating input. However, in the floating pad mode, the electronic device displays a cursor 1421 and moves the displayed cursor 1431 based on at least one of a moving distance and a moving direction of the floating input. Although the electronic device displays the cursor 1421 or 1431 in FIG. 14A at the point 1410 or 1420 corresponding to the user's finger 1400 in operation 1320, this is merely illustrative. The electronic device may also move the cursor 1421 or 1431 in proportion to the moving distance of the floating input. Accordingly, the position of the finger 1400 does not necessarily match the position of the cursor 1421 or 1431.

FIG. 14B illustrates a floating input made by a touch object, such as an electronic pen or a stylus pen.

The electronic device detects the position and movement of an electronic pen 1450 based on an electromagnetic resonance (EMR) scheme. The electronic device moves a displayed cursor from a position 1451 to a position 1441 based on the movement of the electronic device 1450 from a first point 1430 to a second point 1440.

As described above, the electronic device selects one of a plurality of processing modes, even for a floating input, and process the floating input according to the selected processing mode.

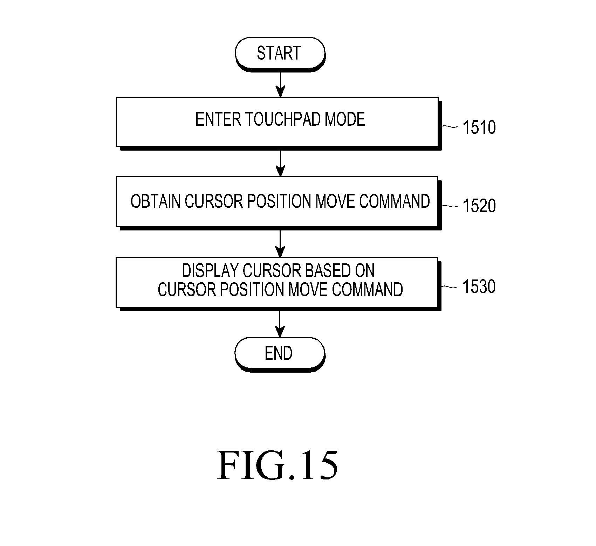

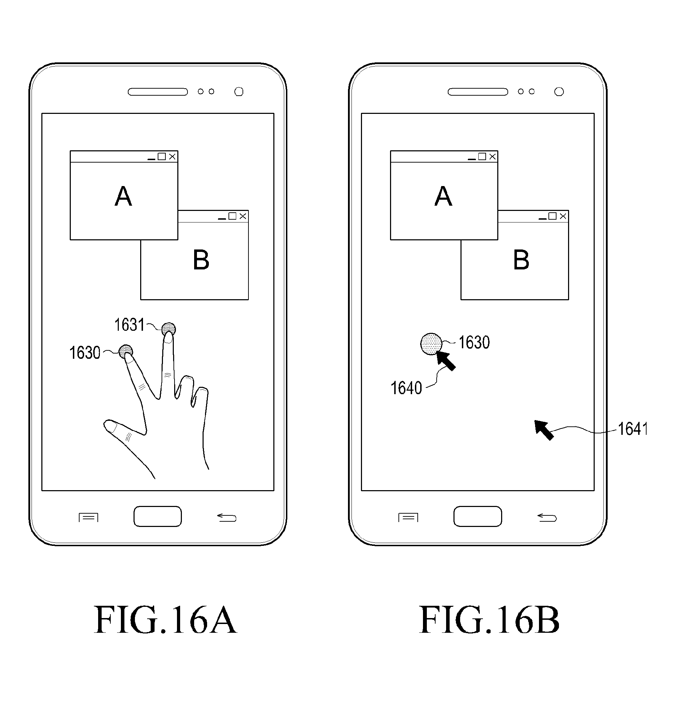

FIG. 15 is a flowchart illustrating a control method of an electronic device according to an embodiment of the present disclosure. FIGs. 16A and 16B illustrate operations of an electronic device according to an embodiment of the present disclosure.

Referring to FIG. 15, in step 1510, the electronic device enters a touchpad mode and displays a cursor.

In step 1520, the electronic device receives a cursor position move command. For example, as illustrated in FIG. 16A, the cursor position move command is a stationary sub-touch input 1630 and a double-tap sub-touch input 1631. The electronic device detects the situation in which the double-tap sub-touch input 1631 is made while the stationary sub-touch input 1630 is maintained.

In step 1530, the electronic device moves the position of the displayed cursor based on the cursor position move command.

For example, as illustrated in FIG. 16B, the electronic device moves a displayed cursor 1640 to the position corresponding to an input point of the stationary sub-touch input 1630. For example, while displaying the cursor at a position 1641 before receiving the cursor position move command, the electronic device moves the displayed cursor to the position 1640 upon receiving the cursor position move command.

The above-described cursor position move command by a combination of the stationary sub-touch input 1630 and the double-tap sub-touch input 1631 is merely exemplary, and those skilled in the art will readily understand that there is no limit to implementation of a user interface for the cursor position move command.

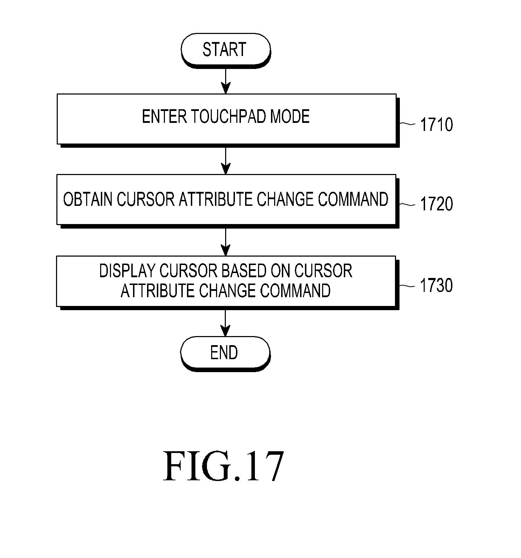

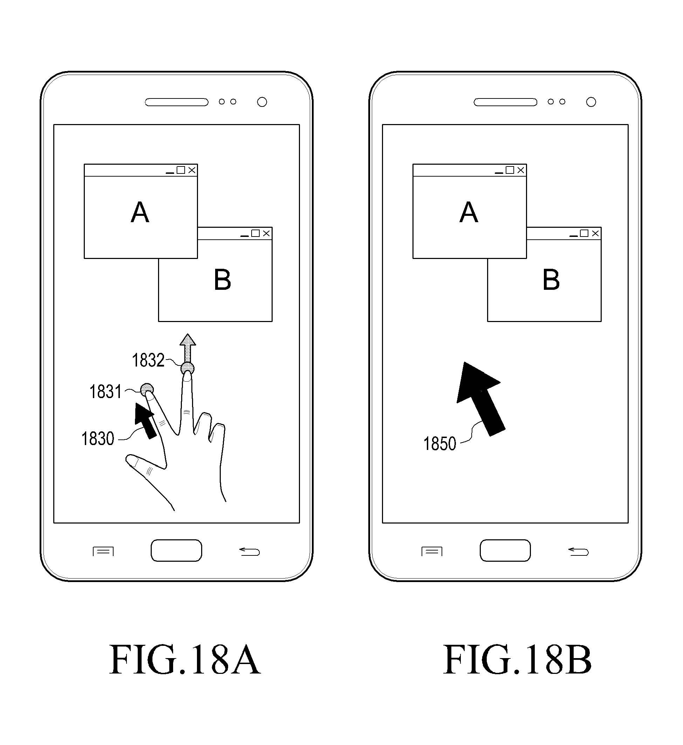

FIG. 17 is a flowchart illustrating a control method of an electronic device according to an embodiment of the present disclosure. FIGs. 18A and 18B illustrate operations of an electronic device according to an embodiment of the present disclosure.

Referring to FIG. 17, in step 1710, the electronic device enters a touchpad mode and displays a cursor 1830.

In step 1720, the electronic device receives a cursor attribute change command.

For example, as illustrated in FIG. 18A, the cursor attribute change command includes a stationary sub-touch input 1831 and a moving sub-touch input 1832. The electronic device detects the situation in which the moving sub-touch input 1832 is made while the stationary sub-touch input 1831 is maintained.

In step 1730, the electronic device changes the attributes of the displayed cursor based on the cursor attribute change command.

For example, as illustrated in FIG. 18B, the electronic device displays an enlarged cursor 1850 at a position corresponding to an input point of the stationary sub-touch input 1831. That is, the electronic device displays the enlarged cursor 1850 by changing the size attribute among the attributes of the cursor. If a moving sub-touch input in the opposite direction of the moving sub-touch input 1832 is made, the electronic device may reduce the size of the displayed cursor 1850.

The above-described cursor attribute change command by a combination of the stationary sub-touch input 1831 and the moving sub-touch input 1832 is merely an example, and those skilled in the art will readily understand that there is no limit to implementation of a user interface for the cursor attribute change command. In addition, those skilled in the art will readily understand that the electronic device can change various other attributes such as color and transparency in addition to the size.

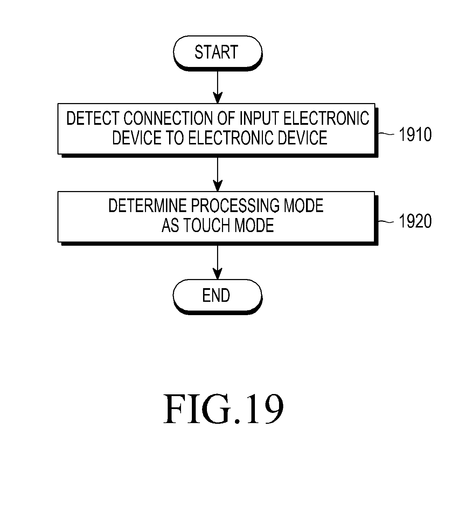

FIG. 19 is a flowchart illustrating a control method of an electronic device according to an embodiment of the present disclosure.

Referring to FIG. 19, in step 1910, the electronic device detects a connection of an additional electronic input device (e.g., a mouse) to the electronic device. For example, the electronic device may include a wired connection port such as a USB port, or may include wireless connection module such as a Bluetooth module. The electronic device may detect the connection of the electronic input device to the electronic device based on the detection of insertion of the electronic input device into the USB port, or the pairing formed by the Bluetooth module.

In step 1920, the electronic device determines a processing mode for a touch input as a touch mode.

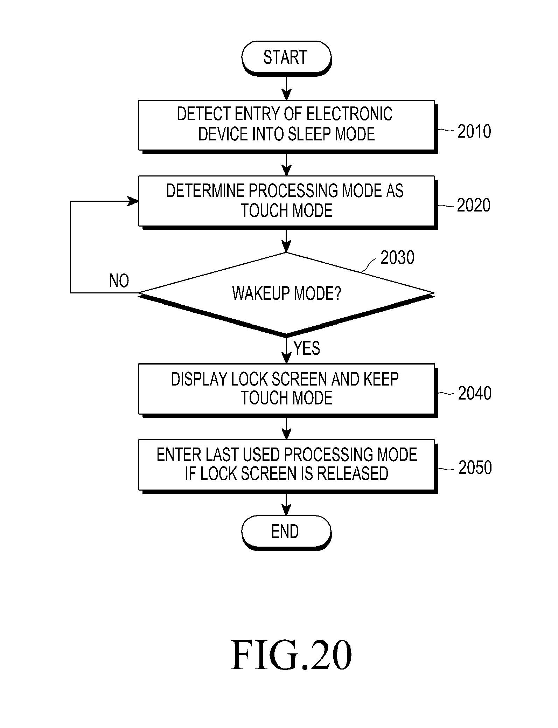

FIG. 20 is a flowchart illustrating a control method of an electronic device according to an embodiment of the present disclosure.

Referring to FIG. 20, in step 2010, the electronic device detects its entry into a sleep mode. For example, if an input is not received for a predetermined time, the electronic device enters the sleep mode and blackens the screen in order to preserve battery power. Alternatively, the electronic device may enter the sleep mode in response to receiving a sleep mode entry command.

In step 2020, the electronic device determines a processing mode as a touch mode.

In step 2030, the electronic device enters the wakeup mode. For example, the electronic device may enter the wakeup mode in response to the user pressing a power key of the electronic device or to an activity input.

In step 2040, after entering the wakeup mode, the electronic device displays a lock screen and maintains the touch mode in order for the user to enter a touch input, e.g., a password or a pattern, for releasing the lock screen.

In step 2050, after the lock screen is released, the electronic device enter the touch processing mode last used before entering the sleep mode.

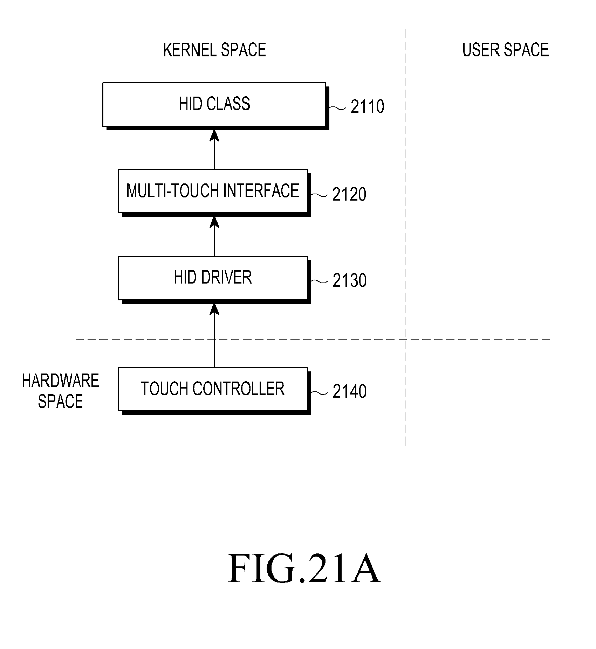

FIG. 21A illustrates touch input processing for comparison with the present disclosure.

Referring to FIG. 21A, the diagram includes a hardware space, a kernel space and a user space.

In the hardware space, a touch controller 2140 is defined. The touch controller 2140 changes the data format so that a touch input that is entered on a touchpad, e.g., a touch screen, may be compatible with a human interface device (HID) driver 2130. More specifically, the touch controller 2140 may deliver the data, the format of which is changed to match the HID format, to a CPU through a bus, and the HID driver 2130 on the OS operating on the CPU may analyze the data.

The HID driver 2130 delivers the analysis result to an HID class 2110 through a multi-touch interface 2120. Accordingly, the OS may process an event using an obtained touch input.

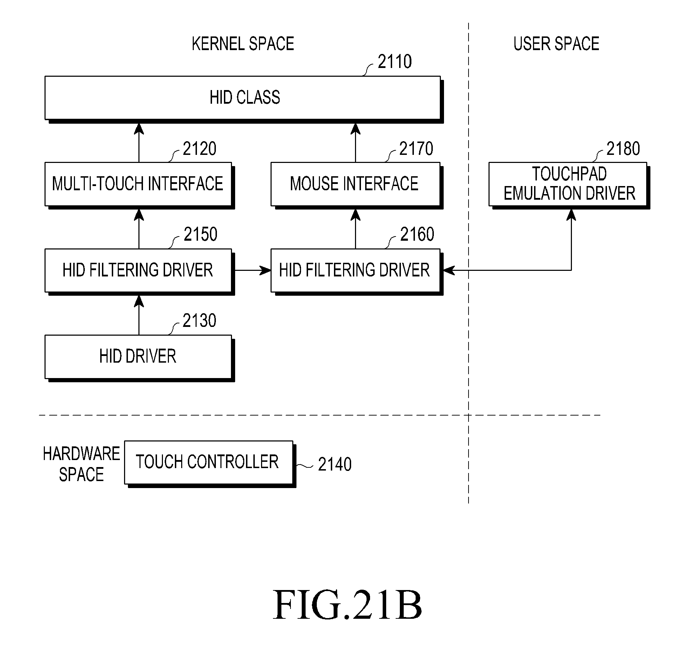

FIG. 21B illustrates touch input processing according to an embodiment of the present disclosure.

Referring to FIG. 21B, compared with FIG. 21A, an HID filtering driver 2150, a user mode driver framework (UMDF) reflector 2160, a mouse interface 2170 and a touchpad emulation driver 2180 are additionally provided. Although the touchpad emulation driver 2180 is provided in the user space, this is merely illustrative, and the touchpad emulation driver 2180 may alternatively be provided in the kernel space.

The HID filtering driver 2150 determines whether it will deliver the received data either to the multi-touch interface 2120 or to the mouse interface 2170, according to the determined processing mode. In the touchpad mode, the HID filtering driver 2150 delivers the data to the mouse interface 2170, and in the touch mode, the HID filtering driver 2150 delivers the data to the multi-touch interface 2120.

The UMDF reflector 2160 creates a mouse driver by UMDF. The UMDF reflector 2160 provides a path for delivering a touchpad operation created in the touchpad emulation driver 2180, to the mouse interface 2170.

The mouse interface 2170 delivers the received data to the HID class 2110.

The touchpad emulation driver 2180 may be a UMDF driver that converts a multi-touch input received from the HID filtering driver 2150 into a mouse input, and reports the mouse input to the HID class 2110.

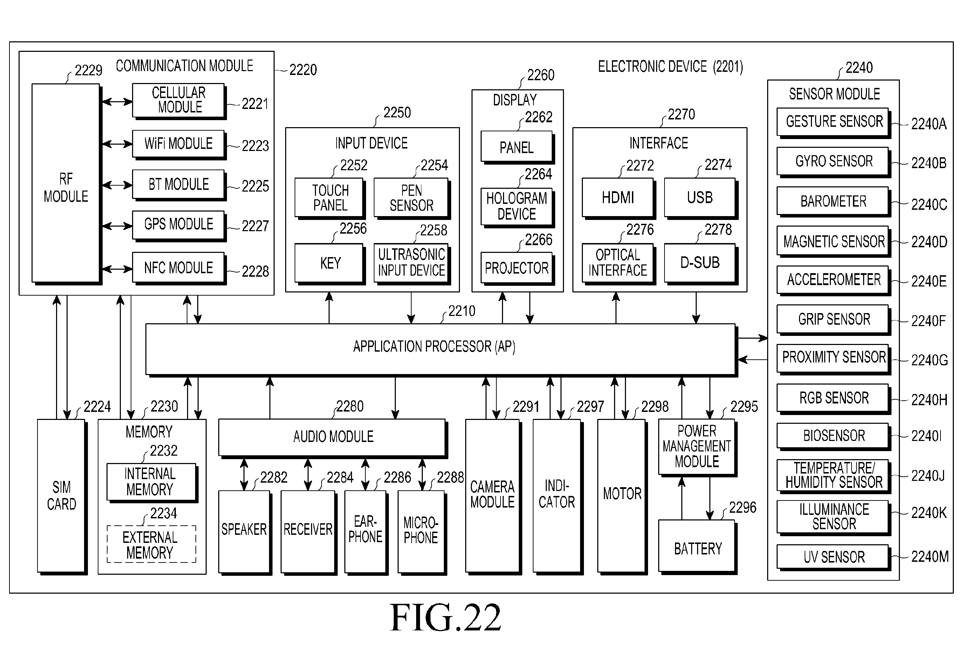

FIG. 22 illustrates an electronic device according to an embodiment of the present disclosure.

Referring to FIG. 22, the electronic device includes an application processor (AP) 2210, a communication module 2220, a subscriber identification module (SIM) card 2224, a memory 2230, a sensor module 2240, an input device 2250, a display 2260, an interface 2270, an audio module 2280, a camera module 2291, a power management module 2295, a battery 2296, an indicator 2297, and a motor 2298.

The AP 2210 may control a plurality of hardware or software components connected to the AP 2210 by running the OS or an application program, and may process and calculate various data. For example, the AP 2210 may be implemented as a system on chip (SoC). The AP 2210 may also include a graphic processing unit (GPU) and/or an image signal processor. The AP 2210 may include at least some (e.g., a cellular module 2221) of the other components illustrated in FIG. 22. The AP 2210 may load, on a volatile memory, a command or data received from at least one of other components (e.g., non-volatile memory) and process the loaded data, and may store a variety of data in a non-volatile memory.

The communication module 2220 includes the cellular module 2221, a WiFi module 2223, a Bluetooth (BT) module 2225, a GPS module 2227, an NFC module 2228, and a radio frequency (RF) module 2229.

The cellular module 2221 may provide a voice call service, a video call service, a messaging service or an Internet service over a communication network. The cellular module 2221 may identify and authenticate the electronic device 2201 within the communication network using a subscriber identification module (e.g., the SIM card 2224). The cellular module 2221 may have some of the functions that can be provided by the AP 2210. The cellular module 2221 may include a communication processor (CP).

Each of the WiFi module 2223, the BT module 2225, the GPS module 2227 or the NFC module 2228 may include, for example, a processor for processing the data transmitted or received through the corresponding module. At least some of the cellular module 2221, WiFi module 2223, the BT module 2225, the GPS module 2227 or the NFC module 2228 may be included in one integrated chip (IC) or IC package.

The RF module 2229 may transmit and receive communication signals (e.g., RF signals). The RF module 2229 may include a transceiver, a power amplifier module (PAM), a frequency filter, a low noise amplifier (LNA), or an antenna.

At least one of the cellular module 2221, the WiFi module 2223, the BT module 2225, the GPS module 2227 or the NFC module 2228 may transmit and receive RF signals through a separate RF module.

The SIM card 2224 may include a card with a subscriber identification module and/or an embedded SIM. The SIM card 2224 may include unique identification information (e.g., integrated circuit card identifier (ICCID)) or subscriber information (e.g., international mobile subscriber identity (IMSI)).

The memory 2230 includes an internal memory 2232 and an external memory 2234. The internal memory 2232 may include at least one of a volatile memory (e.g., dynamic RAM (DRAM), static RAM (SRAM), synchronous dynamic RAM (SDRAM), etc.) or a non-volatile memory (e.g., one time programmable ROM (OTPROM), programmable ROM (PROM), erasable and programmable ROM (EPROM), electrically erasable and programmable ROM (EEPROM), mask ROM, flash ROM, flash memory (e.g., a NAND flash, a NOR flash, etc.)), hard drive, or solid state drive (SSD).

The external memory 2234 may further include a flash drive, for example, compact flash (CF), secure digital (SD), micro secure digital (Micro-SD), mini secure digital (Mini-SD), extreme digital (xD), a memory stick, etc. The external memory 2234 may be functionally and/or physically connected to the electronic device 2201 through various interfaces.

The sensor module 2240 may measure the physical quantity or detect the operating status of the electronic device 2201, and convert the measured or detected information into an electrical signal. The sensor module 2240 includes a gesture sensor 2240A, a gyro sensor 2240B, a barometer 2240C, a magnetic sensor 2240D, an accelerometer 2240E, a grip sensor 2240F, a proximity sensor 2240G, a color sensor (e.g., red, green, blue (RGB) sensor) 2240H, a biosensor 22401, a temperature/humidity sensor 2240J, an illuminance sensor 2240K, and a ultra violet (UV) sensor 2240M.

Additionally or alternatively, the sensor module 2240 may include an E-nose sensor, an electromyography (EMG) sensor, an electroencephalogram (EEG) sensor, an electrocardiogram (ECG) sensor, an infrared (IR) sensor, an iris sensor and/or a fingerprint sensor.

The sensor module 2240 may further include a control circuit for controlling at least one or more sensors belonging thereto.

The electronic device 2201 may further include a processor configured to control the sensor module 2240, separately or as a part of the AP 2210, and may control the sensor module 2240 while the AP 2210 is in a sleep state.

The input device 2250 includes a touch panel 2252, a (digital) pen sensor 2254, a key 2256, and an ultrasonic input device 2258. The touch panel 2252 may use at least one of capacitive, resistive, infrared or ultrasonic scheme. The touch panel 2252 may further include a control circuit. The touch panel 2252 may further include a tactile layer, to provide a tactile or haptic feedback to the user.

The (digital) pen sensor 2254 may be a part of the touch panel 2252, or may include a separate recognition sheet.

The key 2256 may include a physical button, an optical key or a keypad.

The ultrasonic input device 2258 may check data by detecting sound waves with a microphone 2288 in the electronic device 2201 through an input tool for generating an ultrasonic signal.

The display 2260 includes a panel 2262, a hologram device 2264, and a projector 2266. The panel 2262 may include a structure which is the same as or similar to that of the display 160 in FIG. 1. The panel 2262 may be implemented to be, for example, flexible, transparent or wearable. The panel 2262, together with the touch panel 2252, may be implemented as one module.

The hologram device 2264 may show stereoscopic images in the air using the interference of the light.

The projector 2266 may display images by projecting the light on the screen. The screen may be disposed on the inside or outside of, for example, the electronic device 2201.

The display 2260 may further include a control circuit for controlling the panel 2262, the hologram device 2264, or the projector 2266.

The interface 2270 includes an HDMI 2272, a USB 2274, an optical interface 2276, and D-subminiature (D-sub) 2278. Additionally or alternatively, the interface 2270 may include a mobile high-definition link (MHL) interface, a secure digital (SD) card/multi-media card (MMC) interface or an infrared data association (IrDA) interface.

The audio module 2280 may convert the sound and electrical signals bidirectionally. The audio module 2280 may process the sound information that is received or output through a speaker 2282, a receiver 2284, an earphone 2286, and/or the microphone 2288.

The camera module 2291 captures still images and videos. The camera module 2291 may include one or more image sensors (e.g., a front image sensor or a rear image sensor), a lens, an image signal processor (ISP), or a flash (e.g., an LED or xenon lamp).

The power management module 2295 may manage the power of the electronic device 2201. The power management module 2295 may include a power management integrated circuit (PMIC), a charger integrated circuit (IC), or a battery gauge. The PMIC may have a wired and/or wireless charging scheme. The wireless charging scheme may include a magnetic resonance scheme, a magnetic induction scheme, or an electromagnetic scheme, and the power management module 2295 may further include additional circuits (e.g., a coil loop, a resonance circuit, a rectifier or the like) for wireless charging. The battery gauge may measure the remaining capacity, charging voltage, charging current or temperature of the battery 2296. The battery 2296 may include a rechargeable battery and/or a solar battery.

The indicator 2297 may indicate specific status (e.g., boot status, message status, charging status, etc.) of the electronic device 2201 or a part thereof (e.g. the AP 2210).

The motor 2298 may convert an electrical signal into mechanical vibrations, thereby generating a vibration or haptic effect.

The electronic device 2201 may also include a processing device (e.g., GPU) for mobile TV support. The processing device for mobile TV support may process media data that is based on the standards such as, for example, digital multimedia broadcasting (DMB), digital video broadcasting (DVB) or mediaFLO®.

Each of above-described components of the electronic device 2201 may be configured with one or more components, and the names of the components may vary depending on the type of the electronic device 2201. Alternatively, the electronic device 2201 may include at least one of the above-described components, some of which may be omitted, or may further include additional other components. Further, some of the components of the electronic device 2201 may be configured as one entity by being combined, thereby performing the previous functions of the components in the same manner.

Herein, the term "module" may refer to a unit that includes, for example, one or a combination of hardware, software or firmware. The term "module" may be interchangeably used with terms such as, unit, logic, logical block, component, or circuit. The module may be the minimum unit of an integrally constructed part or a part thereof. The module may be the minimum unit for performing one or more functions, or a part thereof. The module may be implemented mechanically or electronically. For example, the module may include at least one of an application-specific integrated circuit (ASIC) chip, field-programmable gate arrays (FPGAs), or a programmable-logic device, which are known or will be developed in the future, and which perform certain operations.

At least a part of the device (e.g., modules or functions thereof) or method (e.g., operations) according to the above-described embodiments of the present disclosure may be implemented by a command that is stored in computer-readable storage media in the form of, for example, a programming module. If the command is executed by one or more processors (e.g., the processor 120), the one or more processors may perform a function corresponding to the command. The computer-readable storage media may be, for example, the memory 130.

The computer-readable storage media may include magnetic media (e.g., a hard disk, a floppy disk, and magnetic tape), optical media (e.g., a compact disc read only memory (CD-ROM) and a digital versatile disc (DVD)), magneto-optical media (e.g., a floptical disk), and a hardware device (e.g., a read only memory (ROM), a random access memory (RAM) and a flash memory). The program command may include not only a machine code such as a code made by a compiler, but also a high-level language code that can be executed by the computer using an interpreter. The above-described hardware device may be configured to operate as one or more software modules to perform the operations according to various embodiments of the present disclosure, and vice versa.

A module or a programming module according to various embodiments of the present disclosure may include at least one of the above-described components, some of which may be omitted, or may further include additional other components. Operations performed by a module, a programming module or other components according to various embodiments of the present disclosure may be performed in a sequential, parallel, iterative or heuristic way. Some operations may be performed in a different order or omitted, or other operations may be added.

In a storage medium storing instructions, when the instructions are executed by at least one processor, the instructions are set to allow the at least one processor to perform at least one operation. The at least one operation may include determining a first processing mode among a plurality of processing modes for a touch input obtained on a touch screen; and processing the obtained touch input based on the first processing mode.

As is apparent from the foregoing description, an aspect of various embodiments of the present disclosure may provide an electronic device and a control method for providing a plurality of processing modes for processing a touch input. The electronic device may provide a touch mode for processing an event associated with an obtained touch input, and a touchpad mode for controlling a cursor displayed on a touch screen based on an obtained touch input. Accordingly, the user may select a processing mode capable of processing a touch input as an easy-to-manipulate processing mode depending on the screen resolution or display mode.

Additionally, the electronic device may automatically determine the processing mode depending on the resolution or display mode of a screen image being displayed.

In addition, an electronic device and a control method are provided for providing a plurality of processing modes for processing a floating input.

While the present disclosure has been particularly shown and described with reference to certain embodiments thereof, it will be understood by those of ordinary skill in the art that various changes in form and details may be made therein without departing from the spirit and scope of the present disclosure as defined by the following claims and their equivalents.

**Claims**

1. A control method of an electronic device, the method comprising:

   determining to switch from a touch mode to a touchpad mode for processing a touch input received on a touch screen; and

processing the received touch input based on the touchpad mode.

2.  The control method of claim 1, further comprising controlling a cursor on the touch screen based on the received touch input.

3.  The control method of claim 2, wherein processing the touch input comprises changing a position of the displayed cursor based on at least one of an input distance and an input direction of the touch input.

4.  The control method of claim 2, wherein the cursor is displayed at a position where the cursor was last placed during a previous touchpad mode or at a position specified by the touch input.

5.  The control method of claim 2, further comprising:

    receiving a cursor attribute change command for changing an attribute of the cursor; and changing the displayed cursor based on the cursor attribute change command.

6.  The control method of claim 1, wherein determining to switch from the touch mode to the touchpad mode comprises: receiving a mode switching command for switching from the touch mode to the touchpad mode; and

    determining to switch from the touch mode to the touchpad mode based on the mode switching command.

7.  The control method of claim 6, wherein the mode switching command comprises a multi-touch input including a plurality of sub-touch inputs.

8.  The control method of claim 7, further comprising determining a first sub-touch input corresponding to a first finger of a user among the plurality of sub-touch inputs.

9.  The control method of claim 8, further comprising displaying a cursor at a position of the first sub-touch input.

10. The control method of claim 1, further comprising:

    detecting a connection of an electronic input device to the electronic device; and determining to switch from the touchpad mode to the touch mode, in response to the detected connection.

11. The control method of claim 1, further comprising:

detecting an entry of the electronic device into a sleep state; and determining to switch from the touchpad mode to the touch mode, in response to the detected entry into the sleep state.

12. The control method of claim 1, further comprising:

    displaying a lock screen in response to switching to a wakeup mode; receiving an unlocking touch input on the lock screen in the touch mode; releasing the lock screen based on the unlocking touch input; and determining to switch from the touch mode to the touchpad mode, in response to releasing the lock screen.

13. The control method of claim 1, wherein determining to switch from the touch mode to the touchpad mode comprises:

    determining that at least one of a resolution and a display mode of a screen image being displayed on the touch screen satisfies a predetermined condition; and determining to switch from the touch mode to the touchpad mode based on the satisfaction of the predetermined condition.

14. The control method of claim 1, wherein the touch input comprises a stationary sub-touch input and a moving sub-touch input, and wherein the touch input is processed based on an input distance and an input direction of the moving sub-touch input.

15. The control method of claim 14, processing the received touch input based on the touchpad mode comprises:

    determining a position of a cursor based on the input distance and the input direction of the moving sub-touch input, and displaying the cursor at the determined position.

FIG.1

*210*

*270*

## APPLICATION

| *271* HOME | *272* DIALER | *273* SMS/MMS | *274* IM | *275* BROWSER | *276* CAMERA | *277* ALARM |

| *278* CONTACT | *279* VOICE DIAL | *280* E-MAIL | *281* CALENDAR | *282* MEDIA PLAYER | *283* ALBUM | *284* CLOCK |

*260*

## API

*230*

## MIDDLEWARE

| *241* APPLICATION MANAGER | *242* WINDOW MANAGER | *243* MULTIMEDIA MANAGER | *244* RESOURCE MANAGER | *235* |

| *245* POWER MANAGER | *246* DATABASE MANAGER | *247* PACKAGE MANAGER | *248* CONNECTIVITY MANAGER | RUNTIME LIBRARY |

| *249* NOTIFICATION MANAGER | *250* LOCATION MANAGER | *251* GRAPHIC MANAGER | *252* SECURITY MANAGER | |

*220*

## KERNEL

| *221* SYSTEM RESOURCE MANAGER | *223* DEVICE DRIVER |

# FIG.2

380

PROCESSING MODULE — 310

ACQUISITION MODULE — 320

DISPLAY MODULE — 330

# FIG.3

START

DETERMINE PROCESSING MODE FOR TOUCH INPUT — 410

PROCESS TOUCH INPUT ACCORDING TO PROCESSING MODE — 420

END

# FIG.4A

FIG.4B

EP 3 029 559 A1

FIG.5A

FIG.5B

FIG.6A

FIG.6B

## FIG.6C

FIG.6D

FIG.6E

FIG.6F

# FIG.6G

# FIG.6H

START

720

TOUCH MODE OR
TOUCH PAD MODE?

TOUCH PAD MODE

TOUCH MODE

PROCESS EVENT BASED ON
COORDINATES, DIRECTION AND
DISTANCE OF TOUCH INPUT

730

PROCESS EVENT BASED ON
DIRECTION AND DISTANCE OF
TOUCH INPUT

740

END

# FIG.7

FIG.8A

FIG.8B

```
                        ┌──────────┐
                        │  START   │
                        └────┬─────┘
                             │
                             ▼
        ┌───────────────────────────────────────┐
        │         OBTAIN COORDINATES OF          │
        │        MULTIPLE SUB-TOUCH INPUTS       │ ─── 910
        └───────────────────┬───────────────────┘
                            │
                            ▼
        ┌───────────────────────────────────────┐
        │  DETERMINE RELATIVE POSITION RELATIONSHIP │ ─── 920
        └───────────────────┬───────────────────┘
                            │
                            ▼
        ┌───────────────────────────────────────┐
        │       DETERMINE SUB-TOUCH INPUT PAIR    │
        │   CORRESPONDING TO THUMB-FOREFINGER PAIR │ ─── 930
        └───────────────────┬───────────────────┘
                            │
                            ▼
        ┌───────────────────────────────────────┐
        │ DETERMINE SUB-TOUCH INPUT CORRESPONDING TO │
        │  FOREFINGER AMONG SUB-TOUCH INPUT PAIRS  │ ─── 940
        └───────────────────┬───────────────────┘
                            │
                            ▼
                        ┌──────────┐
                        │   END    │
                        └──────────┘
```

# FIG.9

FIG.10

FIG.11

START

OBTAIN STATIONARY SUB-TOUCH
INPUT AND MOVING SUB-TOUCH INPUT — 1210

DISPLAY CURSOR BASED ON MOVING
SUB-TOUCH INPUT — 1220

END

# FIG.12

START

DETERMINE TOUCH MODE FOR FLOATING INPUT — 1310

PROCESS FLOATING INPUT ACCORDING TO
PROCESSING MODE — 1320

END

# FIG.13

FIG.14A

FIG.14B

START

ENTER TOUCHPAD MODE — 1510

OBTAIN CURSOR POSITION MOVE COMMAND — 1520

DISPLAY CURSOR BASED ON
CURSOR POSITION MOVE COMMAND — 1530

END

FIG.15

FIG.16A

FIG.16B

START

ENTER TOUCHPAD MODE — 1710

OBTAIN CURSOR ATTRIBUTE CHANGE COMMAND — 1720

DISPLAY CURSOR BASED ON CURSOR
ATTRIBUTE CHANGE COMMAND — 1730

END

# FIG.17

FIG.18A

FIG.18B

START

DETECT CONNECTION OF INPUT ELECTRONIC
DEVICE TO ELECTRONIC DEVICE — 1910

DETERMINE PROCESSING MODE
AS TOUCH MODE — 1920

END

FIG.19

START

DETECT ENTRY OF ELECTRONIC
DEVICE INTO SLEEP MODE — 2010

DETERMINE PROCESSING MODE AS
TOUCH MODE — 2020

2030

NO WAKEUP MODE?

↓ YES

DISPLAY LOCK SCREEN AND KEEP
TOUCH MODE — 2040

ENTER LAST USED PROCESSING MODE
IF LOCK SCREEN IS RELEASED — 2050

END

FIG.20

KERNEL SPACE

USER SPACE

HID CLASS ~ 2110

MULTI-TOUCH INTERFACE ~ 2120

HID DRIVER ~ 2130

HARDWARE
SPACE

TOUCH CONTROLLER ~ 2140

# FIG.21A

KERNEL SPACE | USER SPACE

HID CLASS ⌐2110

MULTI-TOUCH INTERFACE ⌐2120

MOUSE INTERFACE ⌐2170

TOUCHPAD EMULATION DRIVER ⌐2180

HID FILTERING DRIVER ⌐2150

HID FILTERING DRIVER ⌐2160

HID DRIVER ⌐2130

HARDWARE SPACE  TOUCH CONTROLLER ~2140

# FIG.21B

FIG.22

Europäisches
Patentamt

European
Patent Office

Office européen
des brevets

# EUROPEAN SEARCH REPORT

Application Number

EP 15 19 8033

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/186284 A1 (CHANG CHING-SUNG [TW] ET AL) 7 August 2008 (2008-08-07) <br> * paragraph [0013] - paragraph [0016] * <br> * paragraph [0023] - paragraph [0031] * <br> * paragraph [0033] - paragraph [0034] * <br> ----- | 1-15 | INV. <br> G06F3/048 |
| X | US 2010/156813 A1 (DUARTE MATIAS GONZALO [US] ET AL) 24 June 2010 (2010-06-24) <br> * paragraph [0016] - paragraph [0024] * <br> * paragraph [0056] - paragraph [0061] * <br> * paragraph [0084] - paragraph [0119] * <br> ----- | 1-15 | |
| X | US 2014/168119 A1 (ESAKI YASUHIRO [JP]) 19 June 2014 (2014-06-19) <br> * paragraph [0006] - paragraph [0013] * <br> * paragraph [0022] - paragraph [0053] * <br> ----- | 1-15 | |

TECHNICAL FIELDS
SEARCHED     (IPC)

G06F

The present search report has been drawn up for all claims

| Place of search | Date of completion of the search | Examiner |
|---|---|---|
| Berlin | 2 May 2016 | Barba, Michelangelo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 19 8033

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2016

| Patent document cited in search report | Publication date | Patent family member(s) | | Publication date |
|---|---|---|---|---|
| US 2008186284 A1 | 07-08-2008 | TW | 200834395 A | 16-08-2008 |
| | | US | 2008186284 A1 | 07-08-2008 |
| US 2010156813 A1 | 24-06-2010 | CN | 102224483 A | 19-10-2011 |
| | | EP | 2382524 A2 | 02-11-2011 |
| | | US | 2010156813 A1 | 24-06-2010 |
| | | WO | 2010075136 A2 | 01-07-2010 |
| US 2014168119 A1 | 19-06-2014 | JP | 2014120091 A | 30-06-2014 |
| | | US | 2014168119 A1 | 19-06-2014 |

EPO FORM P0459

For more details about this annex : see Official Journal of the European Patent Office, No. 12/82